# EUROPEAN PATENT APPLICATION

(11) **EP 4 822 547 A1**
(43) Date of publication of application: **14.10.2026**
(21) Application number: 26171655.9
(22) Date of filing: 10.04.2026
(51) Int. Cl.: G06F 12/02, G06F 12/0868, G06F 1/30

(54) **INCREMENTAL DIRTY DATA FLUSH FOR PERSISTENT MEMORY**

(30) Priority: 11.04.2025 US 202563787697 P; 10.10.2025 US 202519356034
(71) Applicant: Samsung Electronics Co., Ltd., Suwon-si, Gyeonggi-do 16677 (KR)
(72) Inventor: KACHARE, Ramdas P., San Jose, CA, 95134 (US); ZHAO, Dongwan, San Jose, CA, 95134 (US); BEYGI, Amir, San Jose, CA, 95134 (US); SOLTANIYEH, Mohammadreza, San Jose, CA, 95134 (US); HUEN, Hingkwan, San Jose, CA, 95134 (US); CARGNINI, Luis Vitorio, San Jose, CA, 95134 (US); KAHN, Caroline Diana, San Jose, CA, 95134 (US)
(74) Representative: Kuhnen & Wacker Patent- und Rechtsanwaltsbüro PartG mbB

(57) **Abstract**

A persistent memory device is disclosed. A non-volatile storage (345) may store a data, and a volatile storage (340) may cache the data. A cache controller (360) may manage access to the data in the non-volatile storage (345) and the volatile storage (340). The persistent memory device may include a storage for a table to associate a first number of dirty pages of the data to copy from the volatile storage (340) to the non-volatile storage (345) with an energy level. A second controller may be configured to copy a dirty page of the data from the volatile storage (340) to the non-volatile storage (345) based at least in part on a second number of dirty pages of the data in the volatile storage (340) exceeding the first number of dirty pages.

## Description

### FIELD

The disclosure relates generally to persistent memory, and more particularly to managing dirty data in persistent memory.

### BACKGROUND

Persistent memory devices may include both non-volatile and volatile storage. If data written to the persistent memory device is stored in the volatile storage, the data might be lost if there is a power interruption.

A need remains to manage data in a persistent memory device to prevent data loss.

### SUMMARY

A persistent memory device may track the number of dirty pages in a volatile storage of the persistent memory device. A controller of the persistent memory device may copy a page from the volatile storage to a non-volatile storage to persist the page when the number of dirty pages exceeds a threshold number of dirty pages. The invention is set out in the appended claims.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine equipped to use a persistent memory device, according to embodiments of the disclosure.
FIG. 2 shows details of the machine of FIG. 1, according to embodiments of the disclosure.
FIG. 3A shows one version of the persistent memory device of FIG. 1, according to embodiments of the disclosure.
FIG. 3B shows another version of the persistent memory device of FIG. 1, according to embodiments of the disclosure.
FIG. 4 shows details of the non-volatile storage of FIGs. 3A-3B, according to embodiments of the disclosure.
FIG. 5A shows a flowchart of an example procedure for the cache controller of FIGs. 3A-3B to process a request, according to embodiments of the disclosure.
FIG. 5B continues the flowchart of FIG. 5A of a flowchart of an example procedure for the cache controller of FIGs. 3A-3B to process a request, according to embodiments of the disclosure.
FIG. 6 shows a chart of the number of dirty pages stored in the volatile storage of FIGs. 3A-3B varying over time, according to embodiments of the disclosure.
FIG. 7 shows a flowchart of an example procedure for the firmware of FIGs. 3A-3B to issue commands to the cache controller of FIGs. 3A-3B to flush dirty pages from the volatile storage of FIGs. 3A-3B, according to embodiments of the disclosure.
FIG. 8 shows the processor of FIG. 1 communicating with the persistent memory device of FIG. 1, according to embodiments of the disclosure.
FIG. 9 shows a graph of how much energy is required to copy various amounts of data from the volatile storage of FIGs. 3A-3B to the non-volatile storage of FIGs. 3A-3B, along with a table storing this relationship, according to embodiments of the disclosure.
FIG. 10 shows a flowchart of an example procedure for the firmware of FIGs. 3A-3B to update the thresholds representing how many pages may be stored in the volatile storage of FIGs. 3A-3B, according to embodiments of the disclosure.
FIG. 11 shows a flowchart of an example procedure for the persistent memory device of FIG. 1 to determine when to copy a page from the volatile storage of FIGs. 3A-3B to the non-volatile storage of FIGs. 3A-3B, according to embodiments of the disclosure.
FIG. 12 shows a flowchart of an example procedure for the firmware of FIGs. 3A-3B to determine the number of dirty pages to store in the volatile storage of FIGs. 3A-3B, according to embodiments of the disclosure.
FIG. 13 shows a flowchart of an example procedure for the firmware of FIGs. 3A-3B to instruct the cache controller of FIGs. 3A-3B to copy a page from the volatile storage of FIGs. 3A-3B to the non-volatile storage of FIGs. 3A-3B, according to embodiments of the disclosure.
FIG. 14 shows a flowchart of an example procedure for the cache controller of FIGs. 3A-3B to process the write request of FIG. 8 from the processor of FIG. 1, according to embodiments of the disclosure.
FIG. 15 shows a flowchart of an example procedure for the persistent memory device of FIG. 1 to switch to the energy bank of FIGs. 3A-3B, according to embodiments of the disclosure.
FIG. 16 shows a flowchart of an example procedure for the firmware of FIGs. 3A-3B to update the number of dirty pages to store in the volatile storage of FIGs. 3A-3B, according to embodiments of the disclosure.
FIG. 17 shows a flowchart of an example procedure for the cache controller of FIGs. 3A-3B to update the dirty page counter of FIG. 6 after a page has been copied from the volatile storage of FIGs. 3A-3B to the non-volatile storage of FIGs. 3A-3B, according to embodiments of the disclosure.
FIG. 18 shows a flowchart of an example procedure for the firmware of FIGs. 3A-3B to determine when to instruct the cache controller of FIGs. 3A-3B to copy a page from the volatile storage of FIGs. 3A-3B to the non-volatile storage of FIGs. 3A-3B based on the thresholds of FIG. 6, according to embodiments of the disclosure.
FIG. 19 shows a flowchart of an example procedure for the firmware of FIGs. 3A-3B to determine when to start and stop flush operations from the volatile storage of FIGs. 3A-3B, according to embodiments of the disclosure.
FIG. 20 shows a flowchart of an example procedure for the persistent memory device of FIG. 1 to refuse a write request of FIG. 8 from the processor of FIG. 1, according to embodiments of the disclosure.
FIG. 21 shows a flowchart of an example procedure for the persistent memory device of FIG. 1 to report information to the processor of FIG. 1 or to a Baseboard Management Controller, according to embodiments of the disclosure.
FIG. 22 shows a flowchart of an example procedure for the cache controller of FIGs. 3A-3B to evict a page from the volatile storage of FIGs. 3A-3B, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Computer systems often include two ways to manage data: memory and storage. Memory is often fast to access, but expensive to equip and typically does not offer persistence. Thus, data stored in memory may be lost if there is a power interruption. Storage devices, such as hard disk drives and Solid State Drives (SSDs) may offer large storage capacities and persistence, but may be relatively slower to access than memory.

Often, computer systems attempt to strike a balance between the memory and storage offered. But a persistent memory device may offer a balance between the two, supporting the capacity of storage but offering access speeds closer to that of memory.

A persistent memory device may include both volatile and non-volatile storage. The non-volatile storage is where the data is generally stored, and offers persistence. When data is to read from the non-volatile storage, the data may be copied into the volatile storage. In that way, the data may be accessed using the speed of volatile storage. When the host machine writes data back to the persistent memory device, the data may be written to the volatile storage so that the persistent memory device may return an acknowledgement quickly, and may be copied at some later time to the non-volatile storage.

But because the persistent memory device includes volatile storage, which may be used to store data that has yet to be written to the non-volatile storage, the persistent memory device may need some sort of backup power source. That way, in case the primary power to the persistent memory device is interrupted, the persistent memory device may still be able to copy, or persist, data from the volatile storage to the non-volatile storage before all power is lost, thereby ensuring no data is lost.

The size of the backup power source required for the persistent memory device may be determined by the amount of volatile storage in the persistent memory device. The larger the volatile storage, the larger the backup power source needs to be to support copying data from the volatile storage to the non-volatile storage. But increasing the size of the backup power source adds cost, weight, and complexity to the persistent memory device. On the other hand, while a smaller backup power source is considered advantageous, a smaller backup power source may force a smaller volatile memory, which might cause the persistent memory device to thrash as data is moved between the volatile and non-volatile storages.

The backup power source itself may also degrade over time. While the backup power source might have been sufficient at the time of manufacture to copy all data from the volatile storage to the non-volatile storage, after a couple of years of use the power offered by the backup power source may be insufficient to copy all the data from the volatile storage to the non-volatile storage.

Embodiments of the disclosure attempt to address these problems by tracking the number of dirty pages in the volatile storage. A dirty page may be understood to be a page that has been updated in the volatile storage but the updates have not yet been persisted to the non-volatile storage. Dirty pages may be contrasted with clean pages, which would be pages that have not been updated since they were loaded into the volatile storage from the non-volatile storage. This comparison of dirty and clean pages may be considered similar to how pages in a cache may be considered dirty or clean. The persistent memory device may be aware of how much power the backup power source (which may also be termed an energy bank) may offer at any point in time. The persistent memory device may then determine how much data that amount of power may permit to be copied from the volatile storage to the non-volatile storage, and may manage the number of dirty pages in the volatile storage to avoid exceeding this amount of dirty data in the volatile storage.

Embodiments of the disclosure enable the persistent memory device to flush dirty pages from the volatile storage to the non-volatile storage when convenient or necessary, to ensure that the power in the backup power source is sufficient to complete such flush operations.

Embodiments of the disclosure enable the persistent memory device to start and stop flush operations of dirty data from the volatile storage to the non-volatile storage to attempt to optimize overall latency. Thus, when the amount of dirty data in the volatile storage is relatively low, flush operations may be suspended so that read and write requests from the host processor may take precedence. On the other hand, if the number of dirty pages in the volatile storage is too large for the power in the backup power source, the persistent memory device may refuse requests (or at least, may refuse new write requests) from the host processor until such time as the number of dirty pages has dropped to a level that may be flushed using the available power from the backup power source.

Embodiments of the disclosure enable different backup power sources, volatile storage elements, and non-volatile storage elements to be used. The persistent memory device may include a table that may correlate the amount of power needed to copy various amounts of data from the volatile storage to the non-volatile storage based on the included elements. Thus, embodiments of the disclosure permit a more generalized persistent memory device, which may function regardless of the type of backup power source or the power offered by the backup power source, the type or size of the volatile storage, or the type or size of the non-volatile storage.

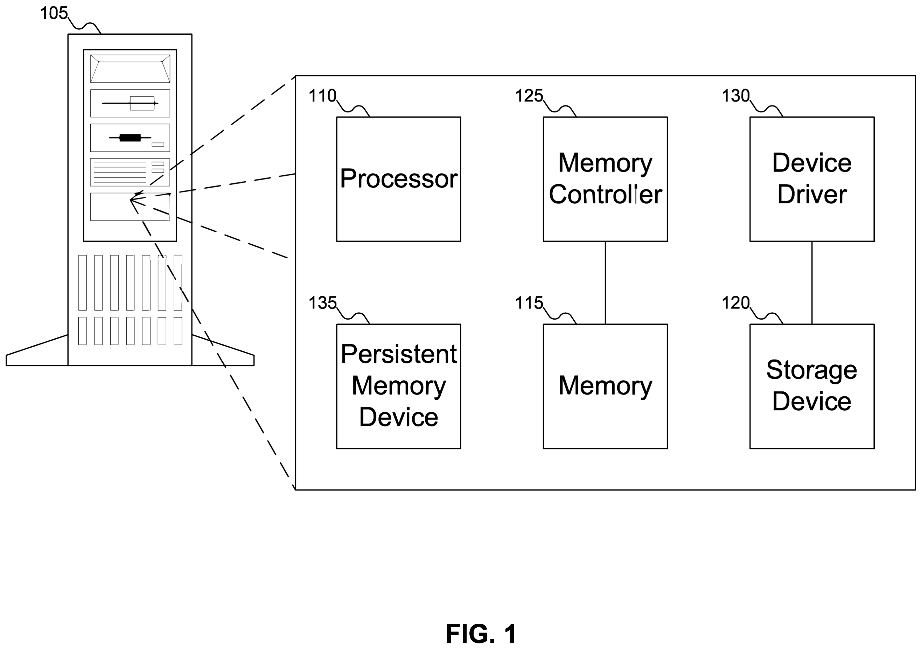

FIG. 1 shows a machine equipped to use a persistent memory device, according to embodiments of the disclosure. In FIG. 1, machine 105, which may also be termed a host or a system, may include processor 110, memory 115, and storage device 120. While FIG. 1 shows one storage device 120, embodiments of the disclosure may include any number of storage devices 120.

Processor 110, which may also be referred to as a host processor, may be any variety of processor. (Processor 110, along with the other components discussed below, are shown outside the machine for ease of illustration: embodiments of the disclosure may include these components within the machine.) While FIG. 1 shows a single processor 110, machine 105 may include any number (one or more, without bound) of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115, which may also be referred to as a main memory, may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115 or storage device 120. Whereas memory 115 may be used to store data that is considered "short-term", storage device 120 may be used to store data that is considered "long-term": that is, data that is expected to be retained for longer periods of time and that should be retained in a persistent manner, even if delivery of power to machine 105 should be interrupted. Storage device 120 may be accessed using device driver 130. While FIG. 1 shows one device driver 130 being used to manage access to storage device 120, embodiments of the disclosure may include more than one device driver 130, each used to manage access to different storage devices 120, or a single device driver 130 may be used to manage access to all storage devices 120.

Storage device 120 may be associated with an accelerator. Such an accelerator may be used for, for example, near-data processing. That is, the accelerator may be used to process data closer to storage device 120, to reduce or eliminate transfer of data from storage device 120 into memory 115. The use of an accelerator for near-data processing may also offload processing from processor 110, as the accelerator may perform such processing instead of processor 110. Like processor 110, such an accelerator may implement a Reduced Instruction Set Computer (RISC) architecture or a Complex Instruction Set Computer (CISC) architecture (among other possibilities), and may be implemented, for example, using a Central Processing Unit (CPU), a Field Programmable Gate Array (FPGA), an Application-Specific Integrated Circuit (ASIC), A System-on-a-Chip (SoC), a Graphics Processing Unit (GPU), a General Purpose GPU (GPGPU), a Neural Processing Unit (NPU), or a Tensor Processing Unit (TPU).

The combination of storage device 120 and accelerator may also be referred to as a computational storage device, computational storage unit, or computational device. Storage device 120 and an accelerator may be designed and manufactured as a single integrated unit, or the accelerator may be separate from storage device 120. The phrase "associated with" is intended to cover both a single integrated unit including both a storage device and an accelerator and a storage device that is paired with an accelerator but that are not manufactured as a single integrated unit. In other words, a storage device and an accelerator may be said to be "paired" when they are physically separate devices but are connected in a manner that enables them to communicate with each other. Further, in the remainder of this document, any reference to storage device 120 may be understood to refer to both storage device 120 and the accelerator either as physically separate but paired (and therefore may include the other device) or to both devices integrated into a single component as a computational storage unit.

While FIG. 1 uses the generic term "storage device", embodiments of the disclosure may include any types of storage devices, examples of which may include hard disk drives and Solid State Drives (SSDs). In some embodiments of the disclosure, storage device 120 may also be a type of storage device that may be combined with, or operate in conjunction with, an accelerator or some other sort of near-storage processor (a computational storage device). In addition, in systems that include multiple storage devices 120, storage devices 120 may be of the same or different types. For example, one storage device 120 might be an SSD, whereas another storage device 120 might be a hard disk drive. Any reference to a specific type of storage device, such as an "SSD", below should be understood to include such other embodiments of the disclosure.

Processor 110 and storage device 120 may communicate across a fabric (not shown in FIG. 1). This fabric may be any fabric along which information may be passed. Such fabrics may include fabrics that may be internal to machine 105, and which may use interfaces such as Peripheral Component Interconnect Express (PCIe), Serial AT Attachment (SATA), or Small Computer Systems Interface (SCSI), among others. Such fabrics may also include fabrics that may be external to machine 105, and which may use interfaces such as Ethernet, Infiniband, or Fibre Channel, among others. In addition, such fabrics may support one or more protocols, such as Non-Volatile Memory Express (NVMe), NVMe over Fabrics (NVMe-oF), Simple Service Discovery Protocol (SSDP), or a cache-coherent interconnect protocol, such as the Compute Express Link ^{®} (CXL^{®}) protocol, among others. (Compute Express Link and CXL are registered trademarks of the Compute Express Link Consortium in the United States.) Thus, such fabrics may be thought of as encompassing both internal and external networking connections, over which commands may be sent, either directly or indirectly, to storage device 120. In embodiments of the disclosure where such fabrics support external networking connections, storage device 120 might be located external to machine 105, and storage device 120 might receive requests from a processor remote from machine 105.

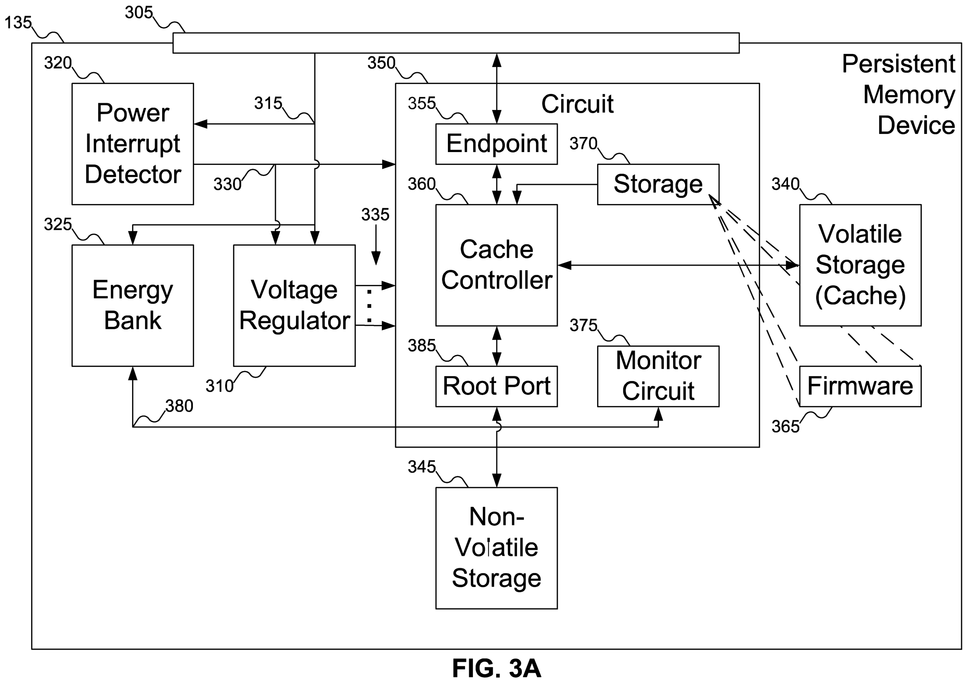

In addition to (or instead of) memory 115 and storage device 120, machine 105 may include persistent memory device 135. Persistent memory device may be a combination of a volatile storage, such as memory 115, and a non-volatile storage, such as storage device 120. That is, persistent memory device 135 may combine the capabilities of both memory 115 and storage device 120. Persistent memory device may offer access times that may be similar to that of memory 115, but may offer storage capacities similar to storage device 120. Thus, persistent memory device 135 may offer the "best of both worlds". The details of persistent memory device 135 are discussed further with reference to FIGs. 3A-3B below.

In some embodiments of the disclosure, persistent memory device 135 may support a cache-coherent interconnect protocol. In some embodiments of the disclosure, the cache-coherent interconnect protocol may be a Compute Express Link^{®} (CXL^{®}) protocol. (Compute Express Link and CXL are registered trademarks of the Compute Express Link Consortium in the United States.) As such, persistent memory device 135 may enable access to data using protocols such as the CXL.io, CXL.mem, and/or CXL.cache protocols. For example, persistent memory device 135 might be accessed solely using the CXL.mem protocol, with persistent memory device 135 presenting the entirety of its address space as an extension of (or replacement for) memory 115.

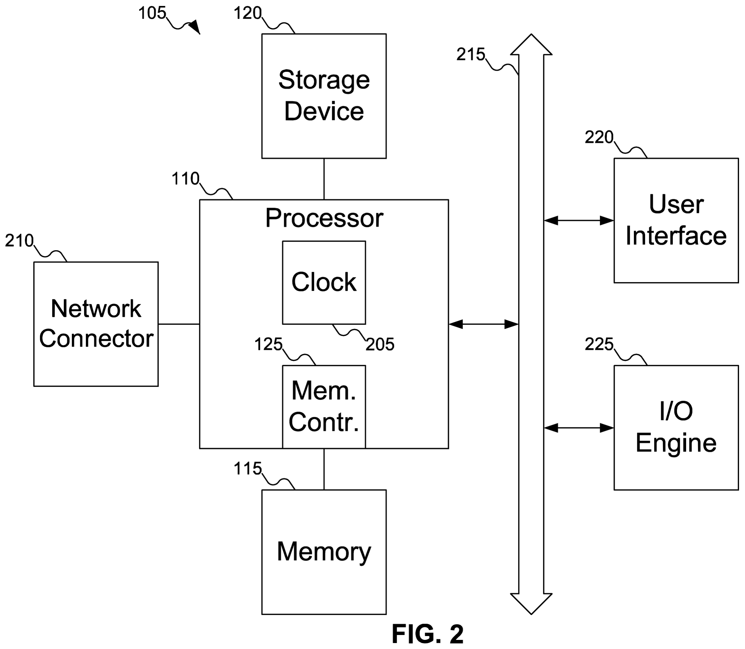

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage device 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3A shows one version of persistent memory device 135 of FIG. 1, according to embodiments of the disclosure. In FIG. 3A, persistent memory device 135 is shown as including various elements. Persistent memory device 135 may include connector 305, which may enable persistent memory device 135 to communicate with processor 110 of FIG. 1. Connector 305 may also provide primary power to persistent memory device 135, although in some embodiments of the disclosure primary power to persistent memory device 135 may be provided across a second connector separate from connector 305 (and not shown in FIG. 3A).

Power may be received and delivered to voltage regulator 310, as shown by lines 315, which may condition the voltage to that defined in the specification of persistent memory device 135 for the other components of persistent memory device 135. For example, the voltage received across connector 305 might be 12 volts (V), 5 V, 3.3 V, or any other voltage, but the components of persistent memory device 135 may expect voltages of 1.1 V, 3.3 V, 0.8 V, or any other voltages. Voltage regulator 310 may ensure that the power delivered the rest of persistent memory device 135 may be the expected voltage level, regardless of the actual voltage provided to persistent memory device 135.

In addition to delivering power to voltage regulator 310, lines 315 may also deliver power to power interruption detector 320. Power interruption detector 320 may determine if the primary power to persistent memory device 135 is interrupted, so that persistent memory device 135 may switch to the backup power provided by energy bank 325. Power interruption detector 320 may include electrical circuit(s) and controller chip(s) using electrical signals such as a pulse or level change. Such pulses or level changes may be monitored by the digital logic (such as the controller chip(s)) to take appropriate actions based on changes in power as detected using the pulses or level changes.

Energy bank 325 may provide power from any desired backup power source: for example, a battery, such as a Lithium-Ion (Li-ion) battery, a capacitor, or a solid state battery, among other possibilities. In addition, energy bank 325 may include multiple backup power sources. For example, energy bank 325 may include multiple batteries or capacitors, each of which may be of the same or different types. Thus, for example, energy bank 325 might include one solid state battery, one Li-ion battery, and one capacitor.

Upon detecting an interruption to the primary power (which might be the result of the administrator powering off machine 105 of FIG. 1, a temporary pause in power delivered to persistent memory device 135, or a long-term termination of primary power to persistent memory device 135), power interruption detector 320 may send a signal to the rest of persistent memory device 135 to start using the backup power offered by energy bank 325. This signal, which may travel along lines 330, may inform voltage regulator 310 to begin receiving power from energy bank 325 rather than from the primary power delivered across a connector (such as connector 305). Voltage regulator 310 may still regulate the voltage received from energy bank 325, to ensure that the rest of persistent memory device 135 receives the appropriate power expected by the rest of persistent memory device 135.

Regardless of the source of power (either primary power or energy bank 325), internal voltage rails 335 may deliver power from voltage regulator 310 to the rest of persistent memory device 135.

Persistent memory device 135 may also include volatile storage 340 and non-volatile storage 345. Volatile storage 340 may be a relatively faster form of storage, such as DRAM, as compared with non-volatile storage 345, which may be, for example, an SSD or a hard disk drive. But non-volatile storage 345 may have a relatively larger capacity than volatile storage 340. Persistent memory device 135 may thus use volatile storage 340 as a cache for data stored on non-volatile storage 345, thereby offering faster access to the data stored on non-volatile storage 345. Persistent memory device 135 may therefore effectively offer a capacity equivalent to that of non-volatile storage 345, but with access speed closer to that of volatile storage 340, offering a combination that is potentially superior to either solution individually. (Obviously, using DRAM as volatile storage 340 with a capacity equivalent to that of an SSD as non-volatile storage 345 would be the ideal solution, but given the cost of DRAM, using solely DRAM would be considerably more expensive than using a combination of DRAM and SSD. Further, since DRAM does not store data persistently, a form of non-volatile storage 345 would still be needed to persist the data. Thus, when factoring in the combination of cost, capacity, access speed, and data persistence, the solution offered by persistent memory device 135 may be superior to alternative solutions.)

Persistent memory device 135 may also include circuit 350. Circuit 350 may be any type of circuit: for example, an FPGA or an ASIC. Circuit 350 may be responsible for managing the operations of persistent memory device 135, including accessing data as requested by processor 110 of FIG. 1 across connector 305 and controlling when to flush data from volatile storage 340 to non-volatile storage 345. In this context, to "flush data" may be understood to mean to copy data from volatile storage 340 to non-volatile storage 345. If power has been interrupted, there is no need to actually remove the data from volatile storage 340, as the data will be erased once persistent memory device 135 has lost all power. Circuit 350 may include endpoint 355, which may receive requests from processor 110 of FIG. 1 across connector 305. Circuit 350 may also include cache controller 360, which may be responsible managing whether data is copied into volatile storage 340. For example, when processor 110 of FIG. 1 issues a request to read data, cache controller 360 may determine whether the data is currently stored in volatile storage 340. If the data in question is currently stored in volatile storage 340, then cache controller 360 may return the data from volatile storage 340; otherwise, cache controller 360 may read the data from non-volatile storage 345, return the data to processor 110 of FIG. 1, and store the data in volatile storage 340 for later use. Similarly, when processor 110 of FIG. 1 issues a request to write data, cache controller may store the data in volatile storage 340, and persistent memory device 135 may copy the data into non-volatile storage 345 later to ensure the data is persisted. Note that except for data that has been written by processor 110 of FIG. 1 to persistent memory device 135, any data currently stored in volatile storage 340 may be assumed to also be stored in non-volatile storage 345 and is therefore persisted against a power interruption.

As implied above, it may be important to ensure that data written by processor 110 of FIG. 1 is persisted in non-volatile storage 345. Thus, cache controller 360 may track information, such as what pages of data stored in volatile storage 340 are currently dirty-data that has been written by processor 110 of FIG. 1 but not yet stored persistently in non-volatile storage 345-or clean-that is, data that is also persistently stored in non-volatile storage 345. For example, cache controller 360 may include a storage that may store a bitmap, with one bit corresponding to each page in volatile storage 340. (In some embodiments of the disclosure, this bitmap may be stored in non-volatile storage 345; in other embodiments of the disclosure, cache controller 360 may access this bitmap from another storage.) If the value of any individual bit in this bitmap is a one, then the corresponding page in volatile storage 340 is dirty; otherwise the value of the bit is a zero, and the corresponding page in volatile storage 340 is clean. Thus, to mark the page as dirty, cache controller 360 may set the bit corresponding to that page in volatile storage 340 to a one. Note that even if volatile storage 340 is relatively large, the size of this bitmap is still a small proportion relative to the overall size of volatile storage 340. For example, if volatile storage 340 is 32 GB, and each page is 4 kilobytes (KB) in size, then the bitmap requires 1 megabyte (MB) (2³² bytes capacity ÷ 4096 bytes per page = 8,388,608 pages: at one bit per page, 8,388,608 bits = 1,048,576 bytes, which is 1 MB, or 0.003% of the total capacity of volatile storage 340).

Cache controller 360 may also track a dirty page counter: that is, the number of dirty pages in volatile storage 340, as the number of dirty pages in volatile storage 340 may factor into whether and/or when to flush dirty data from volatile storage 340 to non-volatile storage 345.

The discussion above implies that cache controller 360 may be responsible for flushing data from volatile storage 340 (that is, for copying dirty pages from volatile storage 340 to non-volatile storage 345). In some embodiments of the disclosure, cache controller 360 may perform this function. But in other embodiments of the disclosure, this function may be handled by another controller separate from cache controller 360. In some embodiments of the disclosure, this second controller might even be external to persistent memory device 135.

Note that since volatile storage 340 may act as a cache to non-volatile storage 345, pages stored in volatile storage 340 may be referred to as cache pages. The terms "page" and "cache page", at least when referring to volatile storage 340, may be understood to be synonymous.

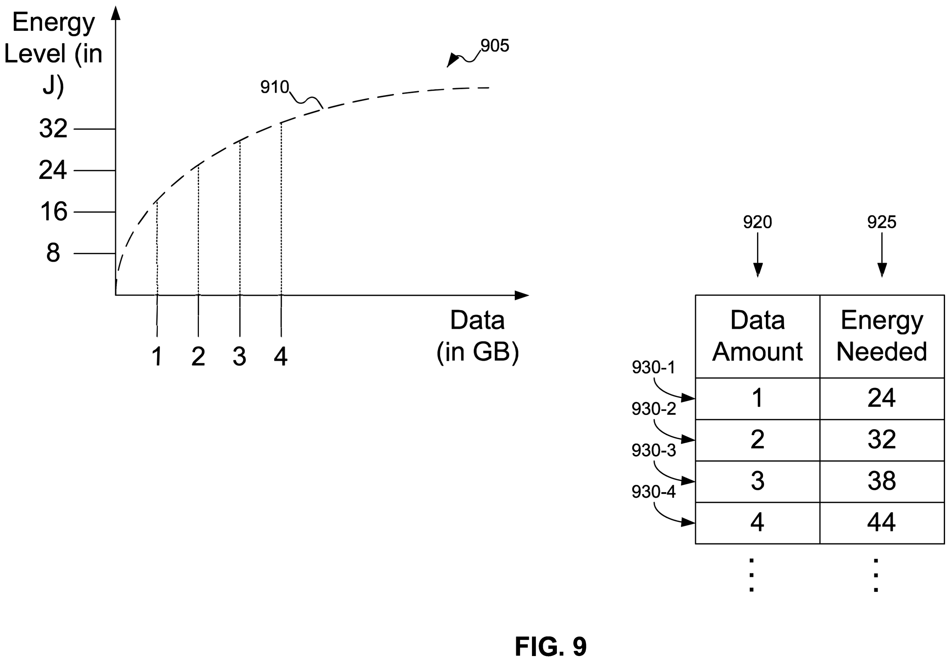

To manage when to flush dirty data from volatile storage 340 to non-volatile storage 345, firmware 365 may be used. Firmware 365 may include a logic to decide when to instruct cache controller 360 to flush dirty data from volatile storage 340 to non-volatile storage 345. This logic may factor in both the current energy level offered by energy bank 325 and the number of dirty pages stored in volatile storage 340 (which, as discussed above, may be tracked by cache controller 360). Firmware 365 may be stored in storage 370, which may also store a table that may associate an amount of data that may be copied from volatile storage 340 to non-volatile storage 345 with an amount of power necessary to complete such a copy operation. This table is discussed further with reference to FIG. 9 below.

In an ideal world, energy bank 325 would always offer the same amount of power. But in the real world, batteries and other power storage elements may degrade over time, offering less and less power. Thus, circuit 350 may include monitor circuit 375, which may periodically check the health of energy bank 325 over lines 380. Monitor circuit 375 may query energy bank 325 about the amount of power it currently stores, which information may then be returned from energy bank 325 to monitor circuit 375. Firmware 365 may then use this information, in conjunction with the table stored in storage 370 to determine how many dirty pages may be stored in volatile storage 340 (as persistent memory device 135 may attempt to limit the number of dirty pages in volatile storage 340 to no more than persistent memory device 135 may guarantee to copy to non-volatile storage 345 based on the available power in energy bank 325).

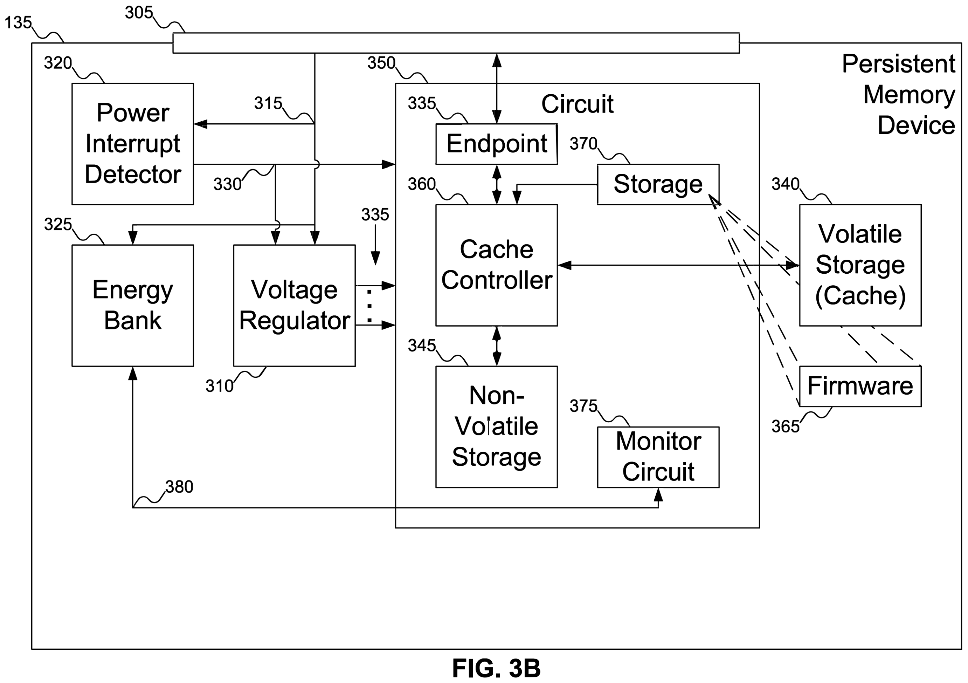

In FIG. 3A, volatile storage 340 and non-volatile storage 345 are shown as external to circuit 350. Thus, to communicate with non-volatile storage 345, circuit 350 may include a port, such as root port 385, which may initiate communication with non-volatile storage 345. Root port 385 may be thought of as the root of a tree for communications with other devices, each of which may include an endpoint, such as endpoint 355. But in some embodiments of the disclosure, volatile storage 340 and non-volatile storage 345 may be part of circuit 350, as illustrated in FIG. 3B.

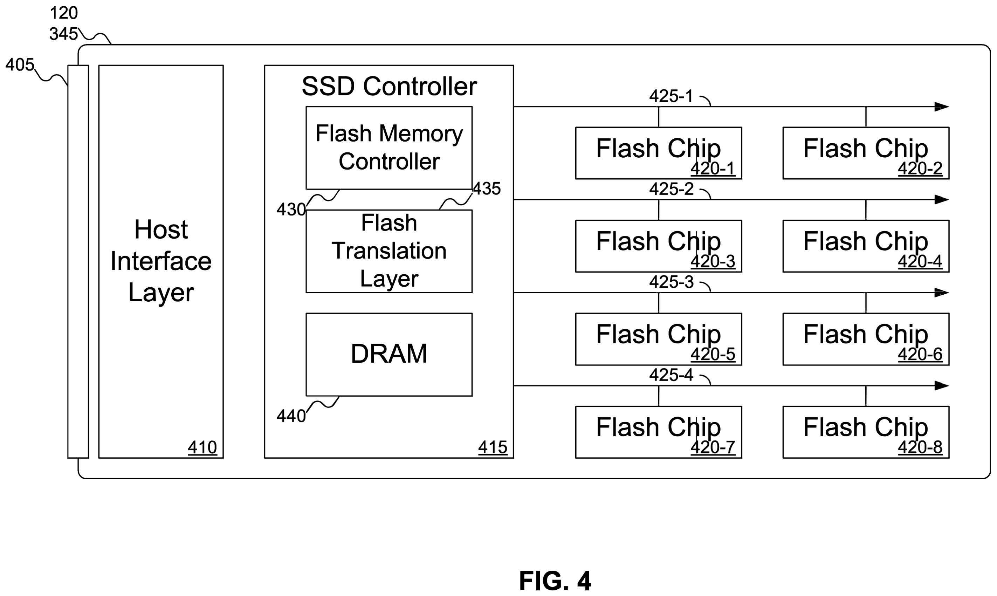

FIG. 3B shows another version of persistent memory device 135 of FIG. 1, according to embodiments of the disclosure. In FIG. 3B, in contrast to FIG. 3A, circuit 350 may include volatile storage 340 and non-volatile storage 345. While FIG. 3B does not suggest that there have been any changes to volatile storage 340 and non-volatile storage 345 relative to FIG. 3A other than their location, in fact there may be some changes. For example, rather than "bodily" including non-volatile storage 345, the various components of non-volatile storage 345 may be included directly in circuit 350, which avoids the need for root port 385 of FIG. 3A (as cache controller 360 may communicate directly with other elements of non-volatile storage 345). These other elements are discussed further with reference to FIG. 4 below.

While FIGs. 3A-3B show two variations of persistent memory device 135-one including volatile storage 340 and non-volatile storage 345 as part of circuit 350 and with both separate from circuit 350-embodiments of the disclosure may support any desired combination, with one included in circuit 350 but not the other. In addition, some components of volatile storage 340 and/or non-volatile storage 345 might be part of circuit 350, but other components might not be part of circuit 350, depending on the desired implementation. Embodiments of the disclosure are intended to include all such variations. In addition, while FIGs. 3A-3B show all components as part of persistent memory device 135, embodiments of the disclosure may have some elements external to persistent memory device 135. For example, energy bank 325 might be external to persistent memory device 135, with an appropriate connection between persistent memory device 135 and energy bank 325 so that persistent memory device 135 is powered even if primary power is interrupted.

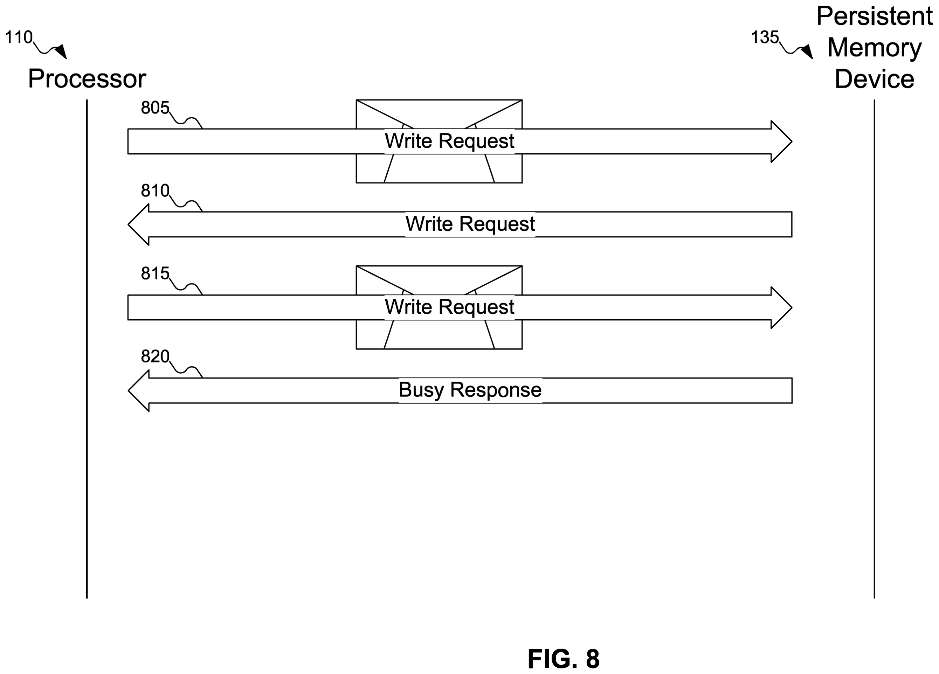

The above description suggests that instructions from firmware 365 to flush dirty cache pages from volatile storage 340 to non-volatile storage 345 may be handled similarly to requests received from processor 110 of FIG. 1. While some embodiments of the disclosure might operate this way, other embodiments of the disclosure might carry out instructions from firmware 365 to copy dirty cache pages from volatile storage 340 to non-volatile storage 345 as background operations. Such embodiments of the disclosure may therefore give priority to requests from processor 110 of FIG. 1, thereby attempting to reduce the time required for persistent memory device 135 to handle requests on behalf of processor 110 of FIG. 1. But it is worth noting that giving priority to host requests might cause the number of dirty cache pages in volatile storage 340 to increase, which might have negative implications, such as causing persistent memory device 135 to potentially refuse write requests from processor 110 of FIG. 1, as discussed with reference to FIG. 8 below.

FIG. 4 shows details of non-volatile storage 345 of FIGs. 3A-3B (or storage device 120 of FIG. 1), according to embodiments of the disclosure. In FIG. 4, non-volatile storage 345 is shown using an implementation including an SSD, but embodiments of the disclosure are applicable to any type of storage device that may support caching of data, as discussed below.

Non-volatile storage 345 may include interface 405 and host interface layer 410. Interface 405 may be an interface used to connect non-volatile storage 345 to machine 105 of FIG. 1. Examples of such interfaces may include Serial AT Attachment (SATA), mSATA, Serial Attached Small Computer Systems Interface (SCSI) (SAS), Non-Volatile Memory Express (NVMe), Peripheral Component Interconnect Express (PCle), U.2, M.2, and Enterprise and Datacenter Standard Form Factor (EDSFF): other interfaces are also possible. Non-volatile storage 345 may include more than one interface 405: for example, one interface might be used for block-based read and write requests, and another interface might be used for key-value read and write requests. While FIG. 4 suggests that interface 405 is a physical connection between non-volatile storage 345 and machine 105 of FIG. 1, interface 405 may also represent protocol differences that may be used across a common physical interface. For example, non-volatile storage 345 might be connected to machine 105 using a U.2, EDSFF, or an M.2 connector, among other possibilities, and non-volatile storage 345 may support block-based requests, byte-based requests, and/or key-value requests, such as may be provided using CXL.io, CXL.mem, or key-value protocols: handling the different types of requests may be performed by a different interface 405. Non-volatile storage 345 may also include a single interface 405 that may include multiple ports, each of which may be treated as a separate interface 405, or just a single interface 405 with a single port, and leave the interpretation of the information received over interface 405 to another element, such as SSD controller 415.

Host interface layer 410 may manage interface 405, providing an interface between SSD controller 415 and the external connections to non-volatile storage 345. If non-volatile storage 345 includes more than one interface 405, a single host interface layer 410 may manage all interfaces, non-volatile storage 345 may include a host interface layer 410 for each interface, or some combination thereof may be used.

Non-volatile storage 345 may also include SSD controller 415 and various flash memory chips 420-1 through 420-8, which may be organized along channels 425-1 through 425-4. Flash memory chips 420-1 through 420-8 may be referred to collectively as flash memory chips 420, and may also be referred to as flash chips, memory chips, NAND chips, chips, or dies. Channels 425-1 through 425-4, which may also be referred to as flash channels, may be referred to collectively as channels 425.

SSD controller 415 may manage sending read requests and write requests to flash memory chips 420 along channels 425. SSD controller 415 may also include flash memory controller 430, which may be responsible for issuing commands to flash memory chips 420 along channels 425. Flash memory controller 430 may also be referred to more generally as memory controller 430 in embodiments of the disclosure where storage device 120 stores data using a technology other than flash memory chips 420. Although FIG. 4 shows eight flash memory chips 420, four channels 425, and one flash memory controller 430, embodiments of the disclosure may include any number (one or more, without bound) of channels 425 including any number (one or more, without bound) of flash memory chips 420, and any number (one or more, without bound) of flash memory controllers 430.

Within each flash memory chip or die, the space may be organized into planes. These planes may include multiple erase blocks (which may also be referred to as blocks), which may be further subdivided into wordlines. The wordlines may include one or more pages. For example, a wordline for Triple Level Cell (TLC) flash media might include three pages, whereas a wordline for Multi-Level Cell (MLC) flash media might include two pages. In some embodiments of the disclosure, the page may be the smallest unit of data that may be written to or read from non-volatile storage 345; in other embodiments of the disclosure, the smallest unit of data that may be written to or read from non-volatile storage 345 may differ from the size of a page.

Erase blocks may also be logically grouped together by SSD controller 415, which may be referred to as a superblock. This logical grouping may enable SSD controller 415 to manage the group as one, rather than managing each block separately. For example, a superblock might include one or more erase blocks from each plane from each die in storage device 120. So, for example, if storage device 120 includes eight channels, two dies per channel, and four planes per die, a superblock might include 8 × 2 × 4 = 64 erase blocks.

SSD controller 415 may also include flash translation layer (FTL) 435 (which may be termed more generally a translation layer, for storage devices that do not use flash storage). FTL 435 may handle translation of logical block addresses (LBAs) or other logical IDs (as used by processor 110 of FIG. 1) and physical block addresses (PBAs) or other physical addresses where data is stored in flash chips 420. FTL 435, may also be responsible for tracking data as it is relocated from one PBA to another, as may occur when performing garbage collection and/or wear leveling.

While FIG. 4 shows SSD controller 415 as including flash memory controller 430, and flash translation layer 435, embodiments of the disclosure may have any, some, or all of these elements located outside SSD controller 415, without loss of generality.

In embodiments of the disclosure such as that illustrated in FIG. 3B above (where the components of non-volatile storage 345 may be part of circuit 350 of FIG. 3B), cache controller 360 of FIG. 3B may communicate directly with SSD controller 415 and its components, which may enable omitting root port 385 of FIG. 3A.

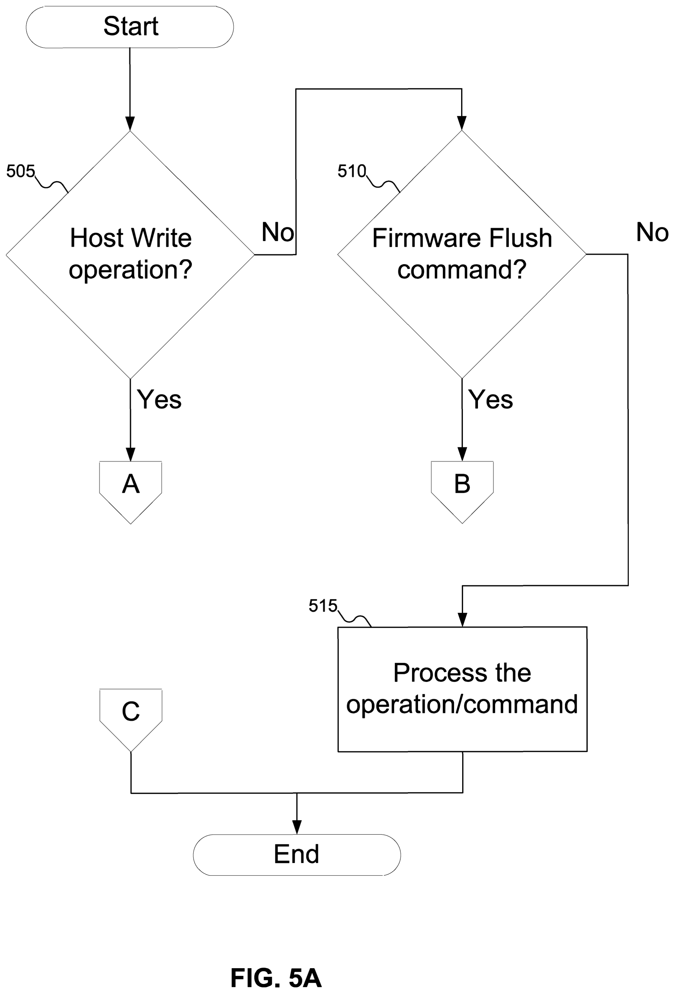

FIGs. 5A-5B show a flowchart of an example procedure for cache controller 360 of FIGs. 3A-3B to process a request, according to embodiments of the disclosure. In FIG. 5A, at block 505, cache controller 360 of FIGs. 3A-3B may determine if the request is a host write operation, and at block 510, cache controller 360 of FIGs. 3A-3B may determine if the request is a firmware flush command. If the request is neither a host write operation or a firmware flush command, then at block 515, cache controller 360 of FIGs. 3A-3B may process the request as might normally be expected.

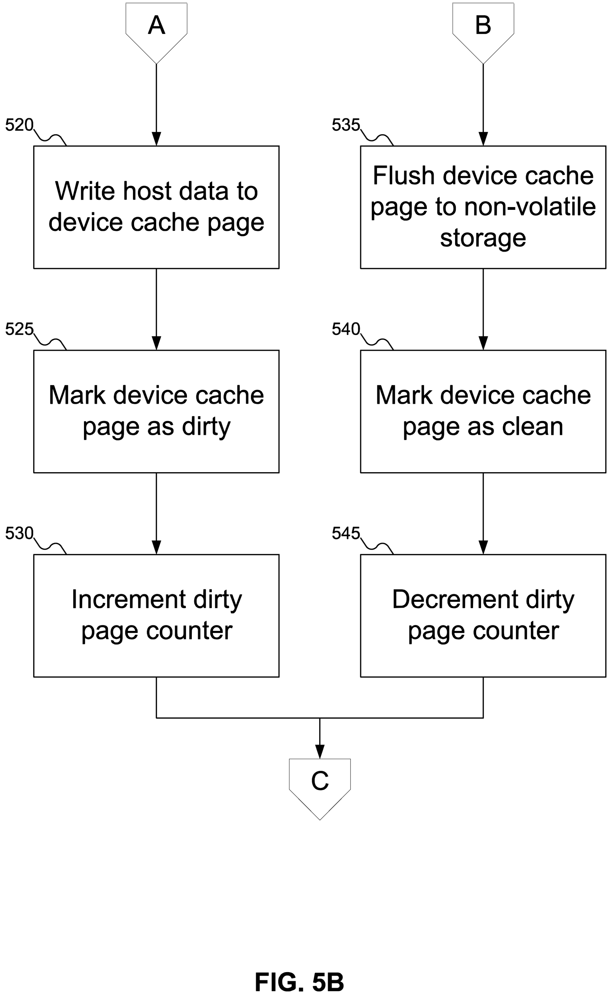

If the request is a host write operation, then at block 520 (FIG. 5B), cache controller 360 of FIGs. 3A-3B may write the data received from processor 110 of FIG. 1 into a cache page in volatile storage 340 of FIGs. 3A-3B. At block 525, cache controller 360 of FIGs. 3A-3B may mark that device cache page as dirty. For example, as discussed with reference to FIGs. 3A-3B above, cache controller 360 of FIGs. 3A-3B may include a bitmap, with one bit corresponding to each page in volatile storage 340 of FIGs. 3A-3B, and may set the bit corresponding to the cache page written to non-volatile storage 345 of FIGs. 3A-3B to one to reflect that the corresponding cache page is dirty. Finally, at block 530, cache controller 360 of FIGs. 3A-3B may increment the dirty page counter, which may count the total number of dirty pages in volatile storage 340 of FIGs. 3A-3B. Note that this dirty page counter may be just a count of the number of bits in the bitmap described above that have a value set to one. Processing of the request is then complete.

It is worth noting that there may be situations in which block 530 might be omitted. For example, consider the situation where processor 110 of FIG. 1 sends two write requests for the same logical address in short order to persistent memory device 135 of FIG. 1. If persistent memory device 135 of FIG. 1 has not yet flushed the data written in the first write request to non-volatile storage 345 of FIGs. 3A-3B, then the second write request does not change the number of dirty cache pages in volatile storage 340 of FIGs. 3A-3B: the second write request merely replaces the old dirty page with a new dirty page. Thus, the overall number of dirty pages has not been changed, and cache controller 360 of FIGs. 3A-3B should not increment the dirty page counter. Cache controller 360 of FIGs. 3A-3B may determine that this situation has occurred by checking the bitmap associated with the page currently being written to volatile storage 340 of FIGs. 3A-3B: if the bitmap reflects that the page currently being written was already marked as dirty, then the number of dirty cache pages in volatile storage 340 has not, in fact, changed, and cache controller 360 of FIGs. 3A-3B should not increment the dirty page counter.

On the other hand, if the request is firmware flush command, then at block 535, cache controller 360 of FIGs. 3A-3B may select a dirty cache page in volatile storage 340 of FIGs. 3A-3B and may flush that dirty cache page to non-volatile storage 345 of FIGs. 3A-3B. Note that cache controller 360 of FIGs. 3A-3B may select the dirty cache page to flush using any desired approach. For example, cache controller 360 of FIGs. 3A-3B may include an eviction policy that may be used to select a cache page (either dirty or clean) in volatile storage 340 of FIGs. 3A-3B to evict to make room for a new cache page. Such an eviction policy might use, for example, a Least Recently Used (LRU) or a Least Frequently Used (LFU) eviction policy or other eviction algorithms. Cache controller 360 of FIGs. 3A-3B may use the eviction policy to identify the dirty cache page that is closest to the top of the list for eviction (note that the eviction list might also include clean cache pages, which would not need to be flushed), and may then flush that dirty cache page. The principle behind this strategy is that the dirty cache page most likely to evicted would need to be flushed anyway when it is evicted from volatile storage 340 of FIGs. 3A-3B, and therefore selecting that dirty cache page to flush is likely to have the least impact on the operation of persistent memory device 135 of FIG. 1. But any strategy may be used to select a dirty cache page to flush: for example, cache controller 360 of FIGs. 3A-3B might pick a dirty cache page at random (based on the bitmap reflecting which cache pages in volatile storage 340 of FIGs. 3A-3B are clean or dirty).

At block 540, after cache controller 360 of FIGs. 3A-3B has flushed the dirty cache page to non-volatile storage 345 of FIGs. 3A-3B, cache controller 360 of FIGs. 3A-3B may mark the cache page as clean (as the data has been flushed to non-volatile storage 345 of FIGs. 3A-3B, the data is no longer considered dirty). Finally, at block 545, cache controller 360 of FIGs. 3A-3B may decrement the dirty page counter, since there is one less dirty page in volatile storage 340 of FIGs. 3A-3B. Processing of the request is then complete.

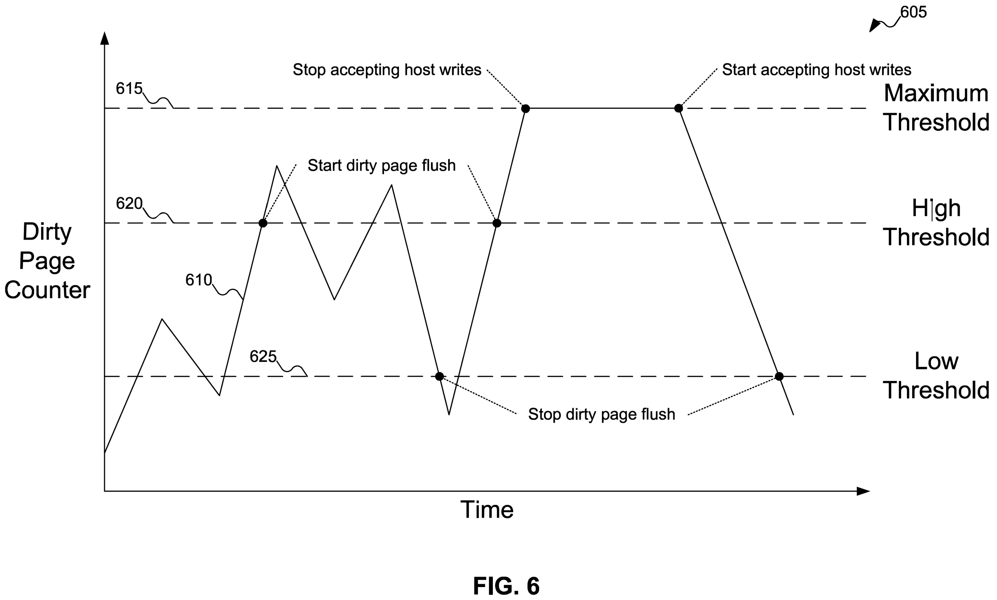

FIG. 6 shows a chart of the number of dirty pages stored in volatile storage 340 of FIGs. 3A-3B varying over time, according to embodiments of the disclosure. FIG. 6 shows graph 605, which is a graph of the dirty page counter over time: that is, graph 605 may represent the number of dirty pages cached in volatile storage 340 of FIGs. 3A-3B relative to time. As may be seen, dirty page counter 610 may vary over time, rising and falling as requests are issued by processor 110 of FIG. 1 and as firmware 365 of FIGs. 3A-3B issues commands to flush dirty data from volatile storage 340 of FIGs. 3A-3B to non-volatile storage 345 of FIGs. 3A-3B.

As may be seen in FIG. 6, three thresholds may be established. Maximum threshold 615 may represent a maximum number of dirty pages that may be cached in volatile storage 340 of FIGs. 3A-3B, given the current available power of energy bank 325 of FIGs. 3A-3B. For a given level of available power in energy bank 325 of FIGs. 3A-3B, there may be a corresponding maximum number of pages that may be persisted from volatile storage 340 of FIGs. 3A-3B to non-volatile storage 345 of FIGs. 3A-3B using that level of available power: maximum threshold 615 may be set to this maximum number of pages that may be persisted using that level of available power. The relationship between levels of available power in energy bank 325 of FIGs. 3A-3B and the maximum number of dirty pages that may be persisted for that level of available power is discussed further with reference to FIG. 9 below. But other embodiments of the disclosure may determine maximum threshold 615 using other approaches as well.

If dirty page counter 610 were to exceed maximum threshold 615, then persistent memory device 135 of FIG. 1 might not be able to guarantee that all dirty pages may be flushed from volatile storage 340 of FIGs. 3A-3B to non-volatile storage 345 of FIGs. 3A-3B, given the available power of energy bank 325 of FIGs. 3A-3B. Thus, when dirty page counter 610 reaches maximum threshold 615, persistent memory device 135 of FIG. 1 might stop accepting write requests from processor 110 of FIG. 1 (to ensure that the number of dirty cache pages in volatile storage 340 of FIGs. 3A-3B does not increase further). For example, persistent memory device 135 of FIG. 1 might report itself as busy, or might drop the write request, which might force processor 110 of FIG. 1 to reissue the write request after a timeout or cause persistent memory device 135 of FIG. 1 to delay the execution of received write requests until dirty page counter 610 is once again below maximum threshold 615. Then, when dirty page counter 610 drops below maximum threshold 615, persistent memory device 135 of FIG. 1 may again begin accepting write requests from processor 110 of FIG. 1.

Firmware 365 of FIGs. 3A-3B may also select two other thresholds to attempt to keep dirty page counter 610 from reaching maximum threshold 615. High threshold 620 may represent a level indicating that persistent memory device 135 of FIG. 3 is beginning to approach its maximum storage for dirty cache pages. Thus, when dirty page counter 610 crosses high threshold 620 in an upward direction (that is, when dirty page counter 610 increases past high threshold 620), firmware 365 of FIGs. 3A-3B may begin to issue flush commands to cache controller 360 of FIGs. 3A-3B, to attempt to keep the number of dirty cache pages in volatile storage 340 of FIGs. 3A-3B from growing too fast (and to keep dirty page counter 610 below maximum threshold 615 if possible). High threshold 620 may be set in any desired manner: for example, as a percentage (for example, 70%) of maximum threshold 615.

Finally, low threshold 625 may represent a level indicating that the number of dirty cache pages in persistent memory device 135 of FIG. 1 is relatively low. Low threshold 625 may be set in any desired manner: for example, as a percentage (for example, 30%) of maximum threshold 615. While having a low dirty page counter 610 is not inherently a bad thing, it might not be of value to continue to flush dirty pages from volatile storage 340 of FIGs. 3A-3B to non-volatile storage 345 of FIGs. 3A-3B. For example, if processor 110 of FIG. 1 frequently issues write requests to update data previously written, repeatedly flushing that data from volatile storage 340 of FIGs. 3A-3B to non-volatile storage 345 of FIGs. 3A-3B might result in writing unnecessary data to non-volatile storage 345 of FIGs. 3A-3B. If non-volatile storage 345 of FIGs. 3A-3B takes a form that may have a limited program/erase count, such as an SSD, these unnecessary flushes might result in wearing out non-volatile storage 345 of FIGs. 3A-3B earlier than necessary, thereby attempting to minimize the number of program/erase cycles used in non-volatile storage 345 of FIGs. 3A-3B (and hopefully increasing the lifetime of non-volatile storage 345 of FIGs. 3A-3B). In addition, flushing data from volatile storage 340 of FIGs. 3A-3B to non-volatile storage 345 of FIGs. 3A-3B when dirty page counter 610 is low might delay processing operations from processor 110 of FIG. 1, which may have a negative impact on processor 110 of FIG. 1. Thus, when dirty page counter 610 drops below low threshold 625 (that is, when dirty page counter decreases below low threshold 625), firmware 365 of FIGs. 3A-3B may stop issuing flush commands, to reduce the load on cache controller 360 of FIGs. 3A-3B. Note that there is a symmetry between the uses of high threshold 620 and low threshold 625: when dirty page counter 610 first crosses either high threshold 620 or low threshold 625 in the appropriate direction, flush commands may start or stop. Another use of low threshold 625 may be to avoid thrashing behavior of the data flush operations around high threshold 620 if maximum threshold 615 and low threshold 625 were not used.

To repeat an earlier point, dirty page counter 610 tracks only the number of dirty cache pages in volatile storage 340 of FIGs. 3A-3B. Thus, while the total number of cache pages in volatile storage 340 of FIGs. 3A-3B may be higher than dirty page counter 610, the clean cache pages stored in volatile storage 340 of FIGs. 3A-3B do not factor into dirty page counter 610, and therefore do not trigger (or stop) flushing dirty data from volatile storage 340 of FIGs. 3A-3B to non-volatile storage 345 of FIGs. 3A-3B.

In some embodiments of the disclosure, high threshold 620 and low threshold 625 may be calculated as functions of maximum threshold 615. For example, high threshold 620 and low threshold 625 might be calculated as percentages of maximum threshold 615. As a specific example, high threshold 620 might be calculated as 70% or 80% of maximum threshold 615, and low threshold 625 might be calculated as 30% or 40% of maximum threshold 615. Other percentage calculations may also be used. But in other embodiments of the disclosure, high threshold 620 and low threshold 625 may be calculated using other approaches. For example, high threshold 620 and low threshold 625 may represent different workload levels of persistent memory device 135 of FIG. 1: as persistent memory device 135 of FIG. 1 becomes busier, high threshold 620 and/or low threshold 625 might be adjusted upwards to support storing higher amounts of dirty data in persistent memory device 135 of FIG. 1 (to reduce the load on persistent memory device 135 of FIG. 1 imposed by flushing data from volatile storage 340 of FIGs. 3A-3B to non-volatile storage 345 of FIGs. 3A-3B), whereas when the workload on persistent memory device 135 of FIG. 1 drops, thresholds 620 and 625 may be similarly reduced, so that less dirty data is cached in volatile storage 340 of FIGs. 3A-3B. For example, recall that high threshold 620 and low threshold 625 may be set as percentages of maximum threshold 615. Depending upon the workload characteristics and/or instruction from processor 110 of FIG. 1, it may be possible to adjust the thresholds to different values by changing the percentage calculations used for high threshold 620 and/or low threshold 625. Thus, if the workload on persistent memory device 135 of FIG. 1 involves more read requests than write requests, or only a few pages are being updated by processor 110 of FIG. 1, processor 110 of FIG. 1 might instruct persistent memory device 135 of FIG. 1 to use higher values for high threshold 620 and/or low threshold 625.

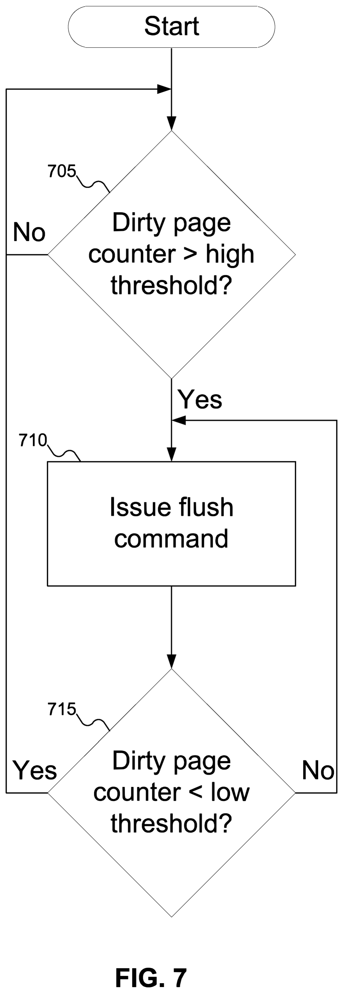

In some embodiments of the disclosure, persistent memory device 135 of FIG. 1 may also check the status of energy bank 325 of FIGs. 3A-3B in determining whether to update high threshold 620 and/or low threshold 625 (as well as maximum threshold 615). For example, if energy bank 325 of FIGs. 3A-3B is experiencing frequent changes in its level of available power (either increasing or decreasing the reported level of available power), this fact might suggest that energy bank 325 of FIGs. 3A-3B is becoming unreliable and might need to be replaced (or persistent memory device 135 of FIG. 1 might need replacement, if energy bank 325 of FIGs. 3A-3B is not independently replaceable). To account for the potential unreliability of energy bank 325 of FIGs. 3A-3B, persistent memory device 135 of FIG. 1 might adjust the levels of high threshold 620 and/or low threshold 625 (for example, by increasing high threshold 620 and decreasing low threshold 625, so that dirty pages may be flushed from volatile storage 340 of FIGs. 3A-3B to non-volatile storage 345 of FIGs. 3A-3B more frequently).FIG. 7 shows a flowchart of an example procedure for firmware 365 of FIGs. 3A-3B to issue commands to cache controller 360 of FIGs. 3A-3B to flush dirty pages from volatile storage 340 of FIGs. 3A-3B, according to embodiments of the disclosure. In FIG. 7, at block 705, firmware 365 of FIGs. 3A-3B may periodically (example every 100 microseconds (µs), every one millisecond (ms), etc.) check to see if dirty page counter 610 of FIG. 6 is greater than high threshold 620 of FIG. 6. If not, then firmware 365 may return to block 705 to repeat the check to see if dirty page counter 610 of FIG. 6 is greater than high threshold 620 of FIG. 6; otherwise, at block 710 firmware 365 of FIGs. 3A-3B may begin issuing flush commands to cache controller 360 of FIGs. 3A-3B to flush dirty cache pages from volatile storage 340 of FIGs. 3A-3B to non-volatile storage 345 of FIGs. 3A-3B. Then, at block 715, firmware 365 of FIGs. 3A-3B may check to see if dirty page counter 610 of FIG. 6 is less than low threshold 625 of FIG. 6. If not, then firmware 365 of FIGs. 3A-3B may return to block 710 to issue another flush command to cache controller 360 of FIGs. 3A-3B; otherwise, firmware 365 may return to block 705, effectively stopping the issuance of flush requests to cache controller 360 of FIGs. 3A-3B.

While FIG. 7 does not reflect the role of maximum threshold 615 of FIG. 6, at or around block 710, firmware 365 of FIGs. 3A-3B may also check to see if dirty page counter 610 of FIG. 6 is greater than maximum threshold 615. If so, then firmware 365 of FIGs. 3A-3B may instruct cache controller 360 of FIGs. 3A-3B to refuse write requests from processor 110 of FIG. 1; otherwise, cache controller 360 of FIGs. 3A-3B may continue to accept write requests from processor 110 of FIG. 1. But the impact of dirty page counter 610 of FIG. 6 exceeding maximum threshold 615 of FIG. 6 does not affect whether or not firmware 365 of FIGs. 3A-3B issues flush commands to cache controller 360 of FIGs. 3A-3B, and therefore is not entirely relevant to the operation of firmware 365 of FIGs. 3A-3B as depicted in FIG. 7.

While FIG. 7 appears to reflect a one-time process, in implementation firmware 365 of FIGs. 3A-3B may perform the flowchart shown in FIG. 7 on a periodic basis. For example, firmware 365 of FIGs. 3A-3B may perform the flowchart shown in FIG. 7 every 1 ms, or every 5 ms, or at any desired interval.

FIG. 8 shows processor 110 of FIG. 1 communicating with persistent memory device 135 of FIG. 1, according to embodiments of the disclosure. In FIG. 8, processor 110 is shown as issuing write request 805 to persistent memory device 135. At this time, it may assumed that dirty page counter 610 of FIG. 6 is below maximum threshold 615 of FIG. 6, and persistent memory device 135 may receive and process write request 805 as normal, resulting in persistent memory device 135 returning response 810.

On the other hand, when processor 110 issues write request 815, it might happen to be that dirty page counter 610 of FIG. 6 is equal to or larger than maximum threshold 615 of FIG. 6. Thus, firmware 365 of FIGs. 3A-3B might have instructed cache controller 360 of FIGs. 3A-3B to refuse write requests from processor 110 in the interim. Persistent memory device 135 may then return busy response 820 to processor 110. As discussed above, busy response 820 might be a message indicating that write request 815 was not processed, or busy response 820 might be persistent memory device 135 simply drop or otherwise ignore write request 815, which might result in processor 110 resending write request 815 after a timeout has occurred. Another possibility would be for persistent memory device 135 to buffer write request 815 until such time as dirty page counter 610 of FIG. 6 has dropped below maximum threshold 615 of FIG. 6. But this option might result in processor 110 of FIG. 1 waiting an unreasonable amount of time for a response from persistent memory device 135 (unless persistent memory device 135 were to issue an early acknowledgement to write request 815 that the data had been stored in persistent memory device 135, which would not be desirable when dirty page counter 610 of FIG. 6 is already above maximum threshold 615 of FIG. 6).

In some embodiments of the disclosure, as described above, persistent memory device 135 may refuse write request 815 if dirty page counter 610 of FIG. 6 is equal to or greater than maximum threshold 615 of FIG. 6. But if the application issuing write request 815 may accept data loss, then persistent memory device 135 might accept write request 815 even though it would increase dirty page counter 610 of FIG. 6 above maximum threshold 615 of FIG. 6. That is, if processor 110 may accept that data might be lost if there is an unexpected power interruption, persistent memory device 135 may process write request 815 even though the potential for data loss in case of power interruption might exist.

FIG. 9 shows a graph of how much energy is required to copy various amounts of data from volatile storage 340 of FIGs. 3A-3B to non-volatile storage 345 of FIGs. 3A-3B, along with a table storing this relationship, according to embodiments of the disclosure. In FIG. 9, graph 905 is shown. While intuitively it might be expected that the amount of energy needed to copy data from volatile storage 340 of FIGs. 3A-3B is linear-that is, the amount of energy needed to copy, say, 8 GB of data is twice the energy needed to copy 4 GB of data-in actuality the energy needed may be more of a curve, such as curve 910. Thus, the amount of energy needed to copy a first amount of data from volatile storage 340 of FIGs. 3A-3B to non-volatile storage 345 of FIGs. 3A-3B might be greater than the amount of energy needed to copy a second additional amount of data from volatile storage 340 of FIGs. 3A-3B to non-volatile storage 345 of FIGs. 3A-3B. Thus, for example, copying 1 GB of data might require 24 joules (J) of energy (which, presumably, would be supplied by energy bank 325 of FIGs. 3A-3B), but copying 2 GB of data might require 32 J: only 8 additional joules.

The information represented in curve 910 of graph 905 may be used to establish table 915, which may a given amount of data with the amount of energy needed to copy that amount of data from volatile storage 340 of FIGs. 3A-3B to non-volatile storage 345 of FIGs. 3A-3B. Table 915 may be stored, for example, in storage 370 of FIGs. 3A-3B. Table 915 may include two columns: data amount 920, which may represent either an amount of data (measured in **KB,** MB, or GB, among other possible units) or a number of cache pages stored in volatile storage 340 of FIGs. 3A-3B to copy to non-volatile storage 345 of FIGs. 3A-3B, and energy needed 925, which may represent an amount of energy needed to copy the associated amount of data from volatile storage 340 of FIGs. 3A-3B to non-volatile storage 345 of FIGs. 3A-3B. Note that there is a direct relationship between the amount of data that may be copied from volatile storage 340 of FIGs. 3A-3B to non-volatile storage 345 of FIGs. 3A-3B and the number of dirty cache pages that may be stored in non-volatile storage 345 of FIGs. 3A-3B, since the size of a cache page is a known quantity that does not change, and therefore the number of cache pages may be calculated directly from the amount of data. Table 915 may also include entries, such as entries 930-1, 930-2, 930-3, and 930-4 (which may be referred to collectively as entries 930), correlating individual amounts of data with the corresponding energy needed to transfer that amount of data from volatile storage 340 of FIGs. 3A-3B to non-volatile storage 345 of FIGs. 3A-3B.

Note that table 915, like graph 905, may be independent of energy bank 325 of FIGs. 3A-3B. That is, graph 905 and table 915 may reflect the amount of energy needed to copy data from volatile storage 340 of FIGs. 3A-3B to non-volatile storage 345 of FIGs. 3A-3B, without regard to how much energy might be available from energy bank 325 of FIGs. 3A-3B. Table 915 may be determined at the time persistent memory device 135 of FIG. 1 is manufactured, and may be expected to be consistent for all equivalent persistent memory devices 135 of FIG. 1. Then, when energy bank 325 of FIGs. 3A-3B is added to persistent memory device 135 of FIG. 1, persistent memory device 135 of FIG. 1 may use table 915 to determine how many dirty cache pages may be stored in volatile storage 340 of FIGs. 3A-3B, given the available energy from energy bank 325 of FIGs. 3A-3B.

Given the information in table 915, maximum threshold 615 of FIG. 6 may be calculated. For example, if the available energy in energy bank 325 of FIGs. 3A-3B is 44 J, then firmware 365 of FIGs. 3A-3B may perform a reverse lookup in table 915 and may determine that a maximum of 4 GB of data may be stored in volatile storage 340 of FIGs. 3A-3B and persistent memory device 135 of FIG. 1 may still guarantee that all the dirty data may be copied to non-volatile storage 345 of FIGs. 3A-3B in case power is interrupted, which may be used to set maximum threshold 615 of FIG. 6. (As discussed with reference to FIG. 6 above, high threshold 620 of FIG. 6 and low threshold 625 of FIG. 6 may be determined relative to maximum threshold 615 of FIG. 6.)

While FIG. 9 discusses storing the relationship between various energy levels along curve 910 and the corresponding number of data pages that may be flushed from volatile storage 340 of FIGs. 3A-3B to non-volatile storage 345 of FIGs. 3A-3B, other data structures may also be used to store this information. For example, if curve 910 is a linear curve (that is, there is a linear relationship between the energy levels along curve 910 and the corresponding number of data pages that may be flushed from volatile storage 340 of FIGs. 3A-3B to non-volatile storage 345 of FIGs. 3A-3B), then table 915 may be replaced with a simple equation that maps the energy levels along curve 910 to the corresponding number of data pages that may be flushed from volatile storage 340 of FIGs. 3A-3B. But for more complicated or non-linear relationships, table 915 may be the simplest representation.

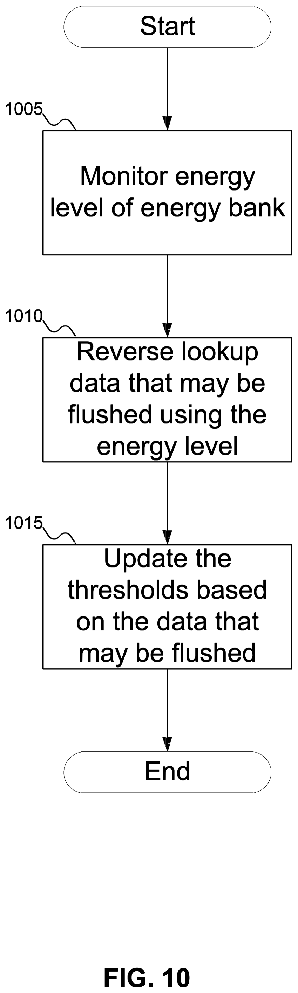

FIG. 10 shows a flowchart of an example procedure for firmware 365 of FIGs. 3A-3B to update the thresholds representing how many pages may be stored in volatile storage 340 of FIGs. 3A-3B, according to embodiments of the disclosure. In FIG. 10, at block 1005, monitor circuit 375 of FIGs. 3A-3B may monitor the energy level of energy bank 325 of FIGs. 3A-3B. At block 1010, firmware 365 of FIGs. 3A-3B may perform a reverse lookup using table 915 of FIG. 9 to determine the amount of dirty data (or the number of dirty cache pages) that may be stored in volatile storage 340 of FIGs. 3A-3B given the energy level of energy bank 325 of FIGs. 3A-3B. Finally, at block 1015, firmware 365 of FIGs. 3A-3B may update maximum threshold 615 of FIG. 6, high threshold 620 of FIG. 6, and low threshold 625 of FIG. 6 based on the updated amount of data that may be copied from volatile storage 340 of FIGs. 3A-3B to non-volatile storage 345 of FIGs. 3A-3B given the current energy level of energy bank 325 of FIGs. 3A-3B.

While FIG. 10 appears to reflect a one-time process, in implementation firmware 365 of FIGs. 3A-3B may perform the flowchart shown in FIG. 10 on a periodic basis. For example, firmware 365 of FIGs. 3A-3B may perform the flowchart shown in FIG. 10 every 5 seconds, or every 1 minute, or every 1 day, or at any desired interval. The interval of periodicity used by firmware 365 of FIGs. 3A-3B may be a function of the expected health of energy bank 325 of FIGs. 3A-3B: newer energy banks 325 of FIGs. 3A-3B may be expected to keep their energy levels fairly constant, whereas older energy banks 325 of FIGs. 3A-3B may be expected to have more fluctuation in their power levels.

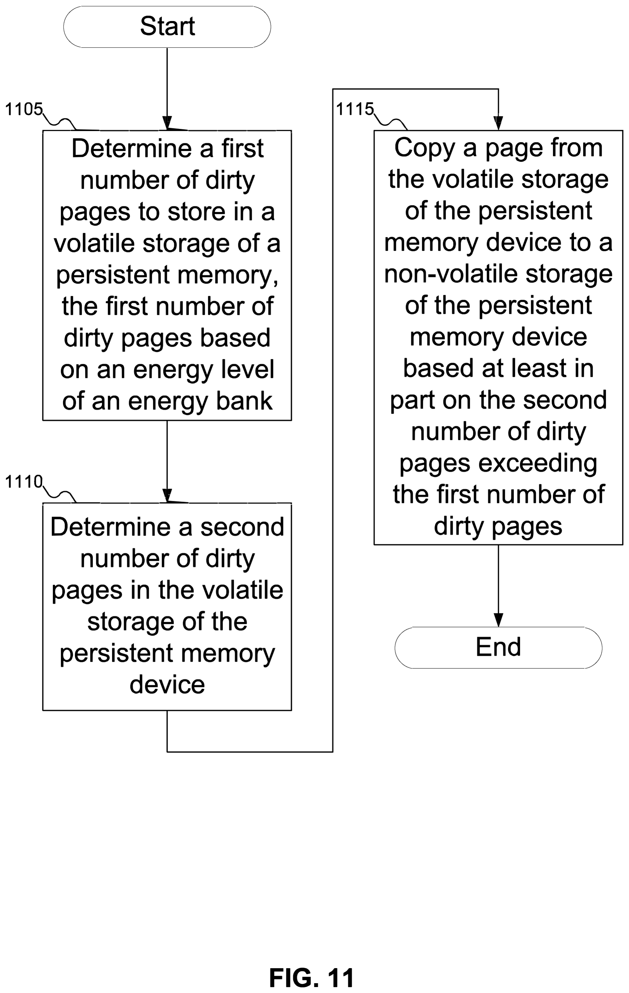

FIG. 11 shows a flowchart of an example procedure for persistent memory device 135 of FIG. 1 to determine when to copy a page from volatile storage 340 of FIGs. 3A-3B to non-volatile storage 345 of FIGs. 3A-3B, according to embodiments of the disclosure. In FIG. 11, at block 1105, firmware 365 of FIGs. 3A-3B may determine a number of dirty cache pages that may be stored in volatile storage 340 of FIGs. 3A-3B (that is, maximum threshold 615 of FIG. 6), based on the current energy level of energy bank 325 of FIGs. 3A-3B. In some embodiments of the disclosure, the current energy level of energy bank 325 of FIGs. 3A-3B might be the only factor used in setting maximum threshold 615 of FIG. 6. But there might be situations in which a portion of the energy level in energy bank 325 of FIGs. 3A-3B might be used for some other purpose. For example, persistent memory device 135 of FIG. 1 might use some energy from energy bank 325 of FIGs. 3A-3B to perform a clean shutdown of persistent memory device 135 of FIG. 1. In that case, not all of the energy in energy bank 325 of FIGs. 3A-3B is necessarily available to be used to persist data from volatile storage 340 of FIGs. 3A-3B to non-volatile storage 345 of FIGs. 3A-3B, and maximum threshold 615 of FIG. 6 may accordingly be set to a lower level. At block 1110, firmware 365 of FIGs. 3A-3B may determine dirty page counter 610 of FIG. 6, representing the number of dirty cache pages currently stored in volatile storage 340 of FIGs. 3A-3B. Finally, at block 1115, cache controller 360 of FIGs. 3A-3B may copy a dirty cache page from volatile storage 340 of FIGs. 3A-3B to non-volatile storage 345 of FIGs. 3A-3B based on dirty page counter 610 of FIG. 6 exceeding maximum threshold 615.

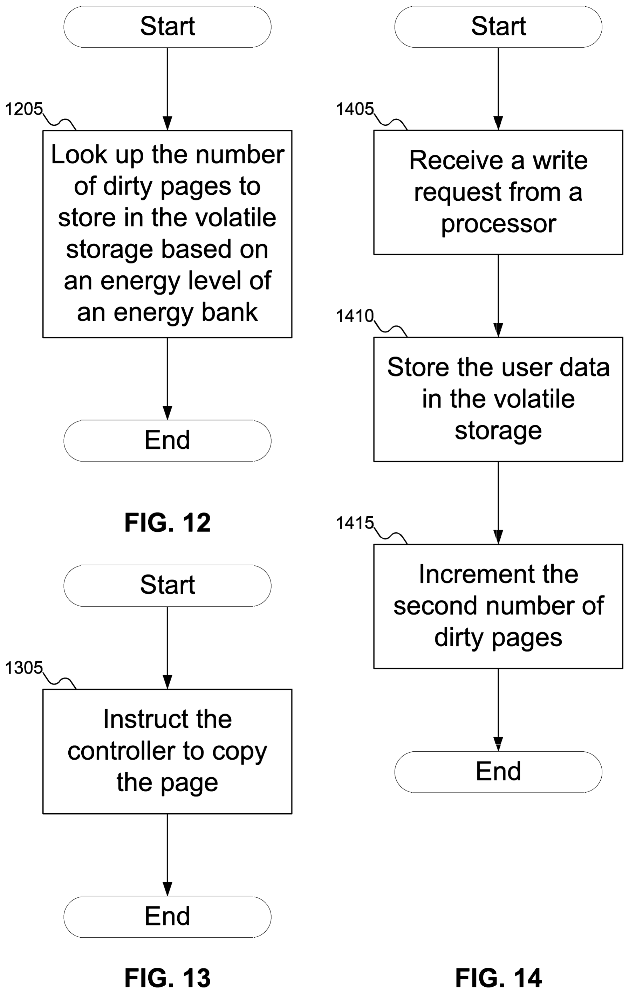

FIG. 12 shows a flowchart of an example procedure for firmware 365 of FIGs. 3A-3B to determine the number of dirty pages to store in volatile storage 340 of FIGs. 3A-3B, according to embodiments of the disclosure. In FIG. 12, at block 1205, given the available energy level of energy bank 325 of FIGs. 3A-3B, firmware 365 of FIGs. 3A-3B may perform a reverse lookup using table 915 of FIG. 9 to determine the number of dirty cache pages that may be stored in volatile storage 340 of FIGs. 3A-3B.

FIG. 13 shows a flowchart of an example procedure for firmware 365 of FIGs. 3A-3B to instruct cache controller 360 of FIGs. 3A-3B to copy a page from volatile storage 340 of FIGs. 3A-3B to non-volatile storage 345 of FIGs. 3A-3B, according to embodiments of the disclosure. In FIG. 13, at block 1305, firmware 365 of FIGs. 3A-3B may issue an instruction to cache controller 360 of FIGs. 3A-3B to flush a dirty cache page from volatile storage 340 of FIGs. 3A-3B to non-volatile storage 345 of FIGs. 3A-3B. Firmware 365 of FIGs. 3A-3B may issue this instruction as described with reference to FIG. 7 above.

FIG. 14 shows a flowchart of an example procedure for cache controller 360 of FIGs. 3A-3B to process write request 805 of FIG. 8 from processor 110 of FIG. 1, according to embodiments of the disclosure. In FIG. 14, at block 1405, persistent memory device 135 of FIG. 1 may receive write request 805 of FIG. 8 from processor 110 of FIG. 1. At block 1410, cache controller 360 of FIGs. 3A-3B may store the user data in a cache page in volatile storage 340 of FIGs. 3A-3B. As discussed with reference to FIGs. 3A-3B above, as part of storing the user data in a cache page in volatile storage 340 of FIGs. 3A-3B, cache controller 360 of FIGs. 3A-3B may also mark the cache page as dirty in a bitmap. Finally, at block 1415, cache controller 360 of FIGs. 3A-3B may increment dirty page counter 610 of FIG. 6. Again, as discussed with reference to FIGs. 3A-3B above, if cache controller 360 of FIGs. 3A-3B is simply updating a cache page in volatile storage 340 of FIGs. 3A-3B that was already dirty, then the number of dirty cache pages in volatile storage 340 of FIGs. 3A-3B has not actually changed, and block 1415 may be omitted.

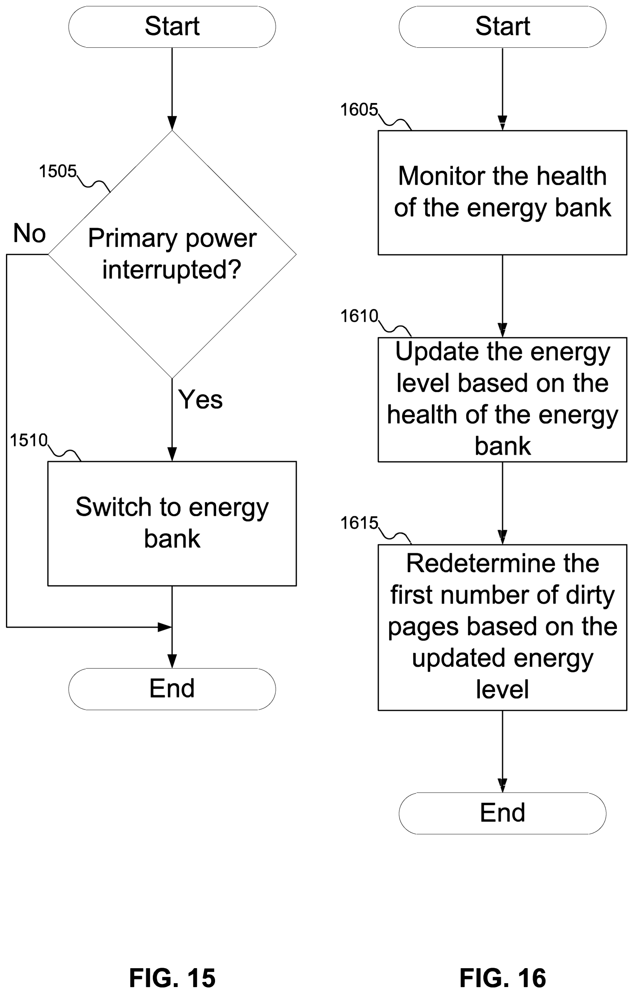

FIG. 15 shows a flowchart of an example procedure for persistent memory device 135 of FIG. 1 to switch to energy bank 325 of FIGs. 3A-3B, according to embodiments of the disclosure. In FIG. 15, at block 1505, power interruption detector 320 of FIGs. 3A-3B may check to see if primary power has been interrupted. If not, then nothing needs to be done; otherwise, at block 1510, persistent memory device 135 of FIG. 1 may switch from the primary power to energy bank 325 of FIGs. 3A-3B to power persistent memory device 135 of FIG. 1 while dirty data is copied from volatile storage 340 of FIGs. 3A-3B to non-volatile storage 345 of FIGs. 3A-3B.

FIG. 16 shows a flowchart of an example procedure for firmware 365 of FIGs. 3A-3B to update the number of dirty pages to store in volatile storage 340 of FIGs. 3A-3B, according to embodiments of the disclosure. In FIG. 16, at block 1605, monitor circuit 375 of FIGs. 3A-3B may monitor the health of energy bank 325 of FIGs. 3A-3B. At block 1610, persistent memory device 135 of FIG. 1 may update the available energy level of energy bank 325 of FIGs. 3A-3B. Finally, at block 1615, firmware 365 of FIGs. 3A-3B may redetermine the number of dirty pages that may be cached in volatile storage 340 of FIGs. 3A-3B based on the updated energy level of energy bank 325 of FIGs. 3A-3B. As discussed with reference to FIGs. 9-10 and 12 above, this determination may be accomplished by performing a reverse lookup in table 915 of FIG. 9 based on the available energy level of energy bank 325 of FIGs. 3A-3B.

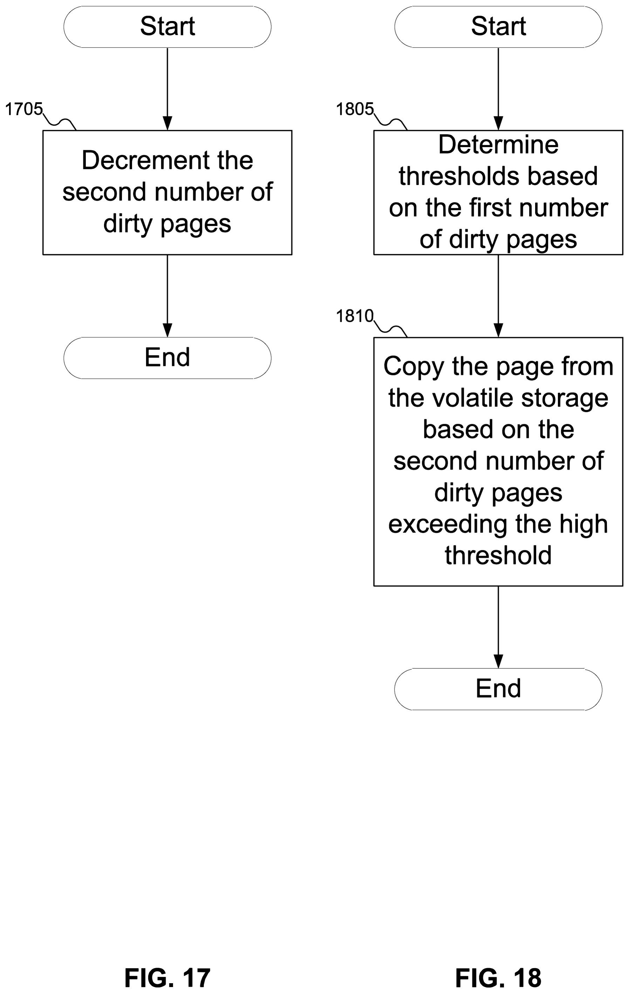

FIG. 17 shows a flowchart of an example procedure for cache controller 360 of FIGs. 3A-3B to update dirty page counter 610 of FIG. 6 after a page has been copied from volatile storage 340 of FIGs. 3A-3B to non-volatile storage 345 of FIGs. 3A-3B, according to embodiments of the disclosure. In FIG. 17, at block 1705, after cache controller 360 of FIGs. 3A-3B has copied a dirty cache page from volatile storage 340 of FIGs. 3A-3B to non-volatile storage 345 of FIGs. 3A-3B (and has perhaps changed the bitmap to reflect that the cache page in question is no longer dirty), cache controller 360 of FIGs. 3A-3B may decrement dirty page counter 610 of FIG. 6.

FIG. 18 shows a flowchart of an example procedure for firmware 365 of FIGs. 3A-3B to determine when to instruct cache controller 360 of FIGs. 3A-3B to copy a page from volatile storage 340 of FIGs. 3A-3B to non-volatile storage 345 of FIGs. 3A-3B based on the thresholds of FIG. 6, according to embodiments of the disclosure. In FIG. 18, at block 1805, firmware 365 of FIGs. 3A-3B may determine maximum threshold 615 of FIG. 6, high threshold 620 of FIG. 6, and low threshold 625 of FIG. 6 based on the number of dirty pages that may be cached in volatile storage 340 of FIGs. 3A-3B. Then, at block 1810, firmware 365 of FIGs. 3A-3B may instruct cache controller 360 of FIGs. 3A-3B to copy a dirty cache page from volatile storage 340 of FIGs. 3A-3B to non-volatile storage 345 of FIGs. 3A-3B based on dirty page counter 610 of FIG. 6 exceeding high threshold 620 of FIG. 6.

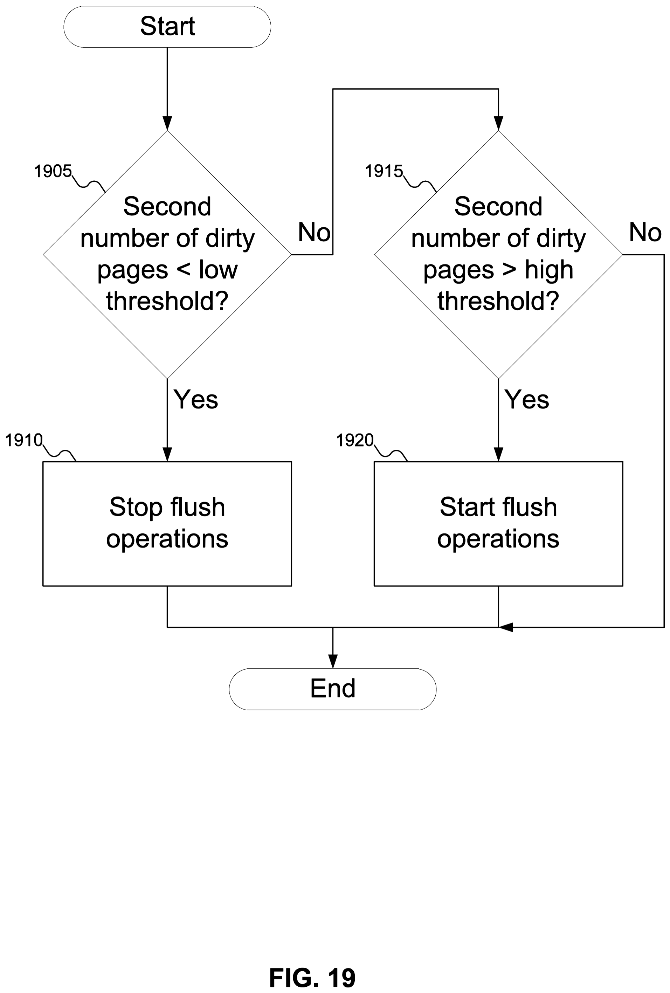

FIG. 19 shows a flowchart of an example procedure for firmware 365 of FIGs. 3A-3B to determine when to start and stop flush operations from volatile storage 340 of FIGs. 3A-3B, according to embodiments of the disclosure. In FIG. 19, at block 1905, firmware 365 of FIGs. 3A-3B may determine whether dirty page counter 610 of FIG. 6 is below low threshold 625 of FIG. 6. If so, then at block 1910, firmware 365 of FIGs. 3A-3B may stop flush operations (by not issuing commands to cache controller 360 of FIGs. 3A-3B to flush data from volatile storage 340 of FIGs. 3A-3B to non-volatile storage 345 of FIGs. 3A-3B). Otherwise, at block 1915, firmware 365 of FIGs. 3A-3B may check to see if dirty page counter 610 of FIG. 6 is greater than high threshold 620 of FIG. 6. If so, then at block 1920, firmware 365 of FIGs. 3A-3B may start flush operations (by issuing commands to cache controller 360 of FIGs. 3A-3B to flush data from volatile storage 340 of FIGs. 3A-3B to non-volatile storage 345 of FIGs. 3A-3B).

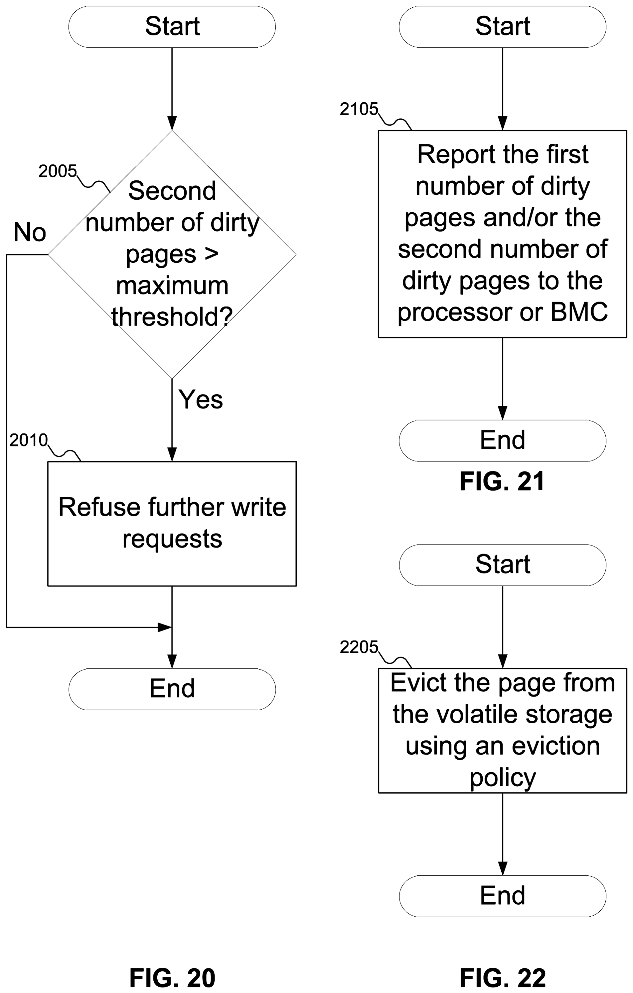

FIG. 20 shows a flowchart of an example procedure for persistent memory device 135 of FIG. 1 to refuse write request 815 of FIG. 8 from processor 110 of FIG. 1, according to embodiments of the disclosure. In FIG. 20, at block 2005, firmware 365 may check to see if dirty page counter 610 of FIG. 6 exceeds maximum threshold 615 of FIG. 6. If so, then at block 2010 firmware 365 of FIGs. 3A-3B may instruct cache controller 360 of FIGs. 3A-3B to refuse write request 815 of FIG. 8 from processor 110 of FIG. 1. As discussed with reference to FIG. 8, this refusal might be an explicit reply to processor 110 of FIG. 1 that write request 815 of FIG. 8 was not processed, or this refusal might involve cache controller 360 of FIGs. 3A-3B "ignoring" write request 815 of FIG. 8, which might result in processor 110 of FIG. 1 reissuing write request 815 of FIG. 8 after a timeout (at which point dirty page counter 610 of FIG. 6 might have dropped below maximum threshold 615 of FIG. 6 and cache controller 360 of FIGs. 3A-3B might be able to process write request 815 of FIG. 8). Note that once dirty page counter 610 of FIG. 6 drops below maximum threshold 615 of FIG. 6, then cache controller 360 of FIGs. 3A-3B may resume processing write requests 805 and 815 of FIG. 8 from processor 110 of FIG. 1.

FIG. 21 shows a flowchart of an example procedure for persistent memory device 135 of FIG. 1 to report information to processor 110 of FIG. 1 or to a Baseboard Management Controller, according to embodiments of the disclosure. In FIG. 21, at block 2105, persistent memory device 135 of FIG. 1 may report various data to processor 110 and/or a Baseboard Management Controller (BMC). The reported data might include, for example, the number of dirty cache pages that may be stored in volatile storage 340 of FIGs. 3A-3B, dirty page counter 610 of FIG. 6, table 915 of FIG. 9, and/or the current health status of energy bank 325 of FIGs. 3A-3B of persistent memory device 135 of FIG. 1.

FIG. 22 shows a flowchart of an example procedure for cache controller 360 of FIGs. 3A-3B to evict a page from volatile storage 340 of FIGs. 3A-3B, according to embodiments of the disclosure. In FIG. 22, at block 2205, cache controller 360 of FIGs. 3A-3B may select a cache page in volatile storage 340 of FIGs. 3A-3B for eviction. As discussed with reference to FIG. 5 above, cache controller 360 of FIGs. 3A-3B might use an LFU or LRU eviction policy.

In FIGs. 11-22, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may include a persistent memory device that includes both a non-volatile storage and a volatile storage. The persistent memory device may also include an energy bank, which may be used to power the persistent memory device in case of an interruption to main power. The persistent memory device may track the available power offered by the energy bank. Using a table that correlates the amount of power needed to copy data from the volatile storage to the non-volatile storage to a required amount of power, the persistent memory device may manage dirty data in the volatile storage. The persistent memory device may limit the amount of dirty data in the volatile storage to an amount that may be copied to the non-volatile storage based on the available power offered by the energy bank. If the amount of dirty data in the volatile storage is greater than may be copied to the non-volatile storage based on the available power of the energy bank, the persistent memory device may initiate copying of dirty data from the volatile storage to the non-volatile storage. The persistent memory device may therefore ensure that, in the event that main power is interrupted, the available power of the energy bank is sufficient to power the persistent memory device to copy dirty data from the volatile storage to the non-volatile storage. By ensuring that no data is lost in the event that main power is interrupted, the persistent memory device offers a technical advantage over persistent memory devices without this technology. Such persistent memory devices enable a tradeoff of functionality and performance over the life cycle of such device. That is, embodiments of the disclosure enable a large capacity persistent memory device to preserve its functionality even if at a lower write throughput performance level when the energy source degrades over time in its life period.

Embodiments of the disclosure may also use different tables correlating the amount of power needed to copy data from the volatile storage to the non-volatile storage, depending on the hardware used for the volatile storage and the non-volatile storage. By enabling a single persistent memory device to manage dirty data regardless of the available power offered by the energy bank or the hardware implementations of either the volatile storage and the non-volatile storage, the persistent memory device offers a technical advantage over solutions that might require hard-coded limits on the amount of dirty data that may be stored.

Embodiments of the disclosure may also account for the possibility that the energy bank may degrade over time, offering levels of power that may fluctuate over time. By accounting for the available power offered by the energy bank, the persistent memory device offers a technical advantage over solutions that assume the energy bank provides an unchanging amount of power.

A Compute Express Link (CXL) memory device may determine how much data may be safely persisted for a given amount of hold-up energy. The CXL memory device may dynamically limit an amount of "dirty" data in its cache that needs to be flushed in the event of sudden power loss based on the amount of energy available at the time of the power loss. The CXL memory device may remain functional even if an energy bank for the device, such as one or more super-capacitors, deteriorate over time, and the device may minimize the throughput impact of reduced dirty data levels. The CXL memory device may enable a trade-off between persistence/functional guarantees versus performance.

According to the subject matter disclosed herein, the CXL memory device monitors and keeps track of the amount of dirty data pages in device cache. The CXL memory device may determine to flush dirty data or to persist dirty data using a first threshold comprising a low dirty data threshold and a second threshold comprising a high dirty data threshold. For example, the low dirty data threshold and the high dirty data threshold can be programmed by a host or by the CXL memory device. In another example, in addition to the low dirty data threshold and the high dirty data threshold, a third threshold comprising a maximum dirty data threshold may be employed. The maximum dirty data threshold, the low dirty data threshold, and the high dirty data threshold may be computed using a hold-up energy level available to the CXL memory device. One or more of the low dirty data threshold, the high dirty data threshold, and the maximum dirty data threshold may be computed and programmed dynamically over the life period of the CXL memory device. For example, the CXL memory device may monitor and keep track of the hold-up energy level dynamically.

According to the subject matter disclosed herein, the CXL memory device may report the hold-up energy level to a host or a baseboard management controller (BMC) dynamically. The CXL memory device may report an amount or quantity of dirty data pages to the host or to the BMC dynamically. A determination may be made as to an amount or level of energy that that the CXL memory device requires to flush various amounts of dirty data, and this determination may be stored in a data-to-hold-up energy table. Such determination of flush energy requirements for various amounts of data may be determined at the time of manufacturing of the device and stored in the device at that time. The data-to-hold-up energy table may be programmed in the CXL memory device. The data-to-hold-up energy table may be reported to the host or the BMC. The maximum dirty data threshold, the high dirty data threshold, and the low dirty data threshold may be derived by performing a reverse lookup on the data-to-hold-up energy table. The CXL memory device may dynamically adjust dirty data level thresholds based on a health of one or more energy bank super-capacitors.

The subject matter disclosed herein may provide a more precise and efficient way of prioritizing data flushing in persistent memory systems. Data flushing latency may be reduced. A power budget may be reduced, saving cost. Data reliability and system performance may be improved. Life-cycle management of CXL memory devices may be enabled. In some embodiments of the disclosure, these memory devices may provide a large-capacity, persistent memory solution using a CXL interface, providing a hybrid approach that combines Dynamic Random Access Memory (DRAM) and Not-And (NAND) flash for tiered memory systems.

The subject matter disclosed herein provides a large-capacity CXL-based persistent memory device that addresses some of the challenges related to data persistence in such a device. A CXL protocol provides a traditional load/store interface to the memory device that is accessed over a Peripheral Component Interconnect Express (PCIe)/CXL bus. The CXL protocol enables the memory device to offer a very large capacity of memory such as 1 terabyte (TB), 4 TB, etc., at a lower cost. The CXL memory device may combine DRAM and NAND memories in a hybrid manner to enable low cost, large memory capacity expansion. A small amount of volatile DRAM in the device may be used as a device cache, whereas the NAND memory enables the full capacity of the CXL memory device to be utilized. When a host reads data from the memory device, data may be provided from the device cache if the data is available in the cache. If the host-requested data is not present in the device cache, the device cache controller may fetch the requested data from the NAND memory and store it in the DRAM device cache, as well as return the data to the host.

According to the subject matter disclosed herein, in response to the host writing data to the device, a device cache controller may insert the write data to the corresponding data page in the device cache. If the page being written/modified by the host is not present in the device cache, the device cache controller may first fetch the page from the NAND memory into the device cache DRAM and then insert the new data into that page. When the Host writes some data to the device, the modified data page may be kept in the DRAM device cache. Such a data page may be referred as a "dirty" page, as the modified data page is yet to be written back to the NAND memory.

According to the subject matter disclosed herein, since the device cache DRAM is volatile, if the power is lost and the dirty page is not written back to the NAND memory, new data would be lost. To avoid such data corruption when the device is shut down or power is lost suddenly for some reason, one or more of the dirty data pages residing in the device cache may be written to the NAND memory before the device is fully powered down. Since the NAND memory is non-volatile memory, it may be used to provide persistent data storage. The CXL memory device may provide a guarantee to the host that all the host data written and acknowledged by the device is persisted. That is to say, after a power down, shutdown, or restart of the device, as well as in the event of sudden power loss, all the host data that was written to the device prior to those events is guaranteed to be available with 100% fidelity. To achieve this persistence guarantee, the CXL memory device maintains an energy bank, which is sometimes referred to as a source of hold-up power or back-up power in the device. In the event of a shutdown, a restart, or a sudden loss of power, energy from the energy bank is used to flush any dirty data that may be present in the volatile memory (DRAM) device cache to non-volatile memory (NAND).

A host central processing unit (CPU) communicates with the CXL memory device through a connector. The connector may include data interface pins as well as power supply pins. The CXL memory device may use a CXL host interface protocol, such as CXL.IO, CXL.mem, and CXL.cache, for data read/write operations. A CXL endpoint module may implement CXL protocol logic. A device cache controller module may perform a data cache operation using a small amount of DRAM and a full capacity of NAND memory. A Non-Volatile Memory Express (NVMe) host module is used by the device cache controller to access NAND memory using a NVMe protocol. In some embodiments of the disclosure, the CXL memory device may use two controller chips: one chip for CXL logic, and a second chip, which may be referred to as an Solid State Drive (SSD) controller chip, for NAND memory operations.

According to the subject matter disclosed herein, the CXL memory device receives electrical power using one or more connector pins from the host that provide one or more voltage levels such as 12 volts (V), 5 V, 3.3 V, etc. The connector voltage pins may be connected to voltage regulators to generate any internal voltage level required for the operation of device circuits such as 1.1 V, 3.3 V, 0.8 V, etc. The connector pins may also be connected to a rechargeable energy bank to store energy for future use. The energy bank may be implemented using super-capacitors or other components. The energy bank may also be referred as a hold-up energy source or a back-up energy source. An amount or level of energy present in the energy bank may be monitored by an Field Programmable Gate Array (FPGA)/Application-Specific Integrated Circuit (ASIC) controller. The amount or level of energy may be obtained by the FPGA/ASIC chip using I2C or SMBUS buses, among other possibilities. The FPGA/ASIC may periodically check the amount of energy available as it may change over time. Over time, the supercapacitor or other components used for energy storage may degrade and lose power, so the FPGA/ASIC may dynamically monitor the hold-up energy level. The FPGA/ASIC may also monitor the health of the energy bank in a sense that sometimes the energy bank may fail completely and in that case may not be able to supply hold-up energy reliably.

According to the subject matter disclosed herein, the connector pins may be connected to a power loss detection circuit designed to detect loss of power coming from the connector pins. When a power loss is detected, the power loss detection circuit may inform the voltage regulators to switch the input power supply from connector pins to the hold-up energy bank. The voltage regulators may then switch the input power supply smoothly without creating any glitches or disruptions on the internal voltage rails so as to not disrupt the operation of the device logic and circuits. The power loss detection event or trigger may also be provided to the FPGA/ASIC controller.

In response to the FPGA/ASIC controller chip receiving a Power Loss Detected trigger, the controller chip may immediately start "writing" (flushing dirty data pages) from the DRAM to the NAND memory. The controller chip may also attempt to lower power usage by minimizing or stopping any non-critical logic operations to conserve power. Once all the dirty data pages, any relevant metadata, and critical data structures are written to the NAND memory, the FPGA/ASIC controller may enter into an idle or safe state for imminent power loss.

An ARM core present in the FPGA/ASIC controller may monitor an amount of dirty pages in the device cache. An ARM Core firmware may end a flush command to the device cache controller to write or flush one or more data pages to the NAND memory from the device cache. The device cache controller may provide a number of dirty data pages present information at any given time to the ARM Core firmware.

In a single chip integrated CXL memory device, a CXL host interface logic and a device cache controller logic may directly communicate with a flash translation layer (FTL). There is no need for an NVMe protocol in this integrated device. An FTL layer may perform logical to physical address translation as well as one or more NAND media management operations such as wear leveling and garbage collection. A flash channel logic may implement logic to perform data read and write operations on NAND media using a protocol such as Open NAND Flash Interface (ONFI), Toggle, etc.

### Incremental dirty data flush

The device cache controller may keep track of the dirty data pages present in the device cache. When a host performs a write or store operation, the corresponding page may be marked as a dirty page. At any given time the device cache may contain some number of dirty pages. When a dirty page is written back to the NAND memory, that page may be marked as clean (that is, no longer dirty). The device cache controller at times may flush some or all of the dirty pages to NAND to make room for new data. Hence, the number of dirty pages in the device cache may change dynamically.

According to the subject matter disclosed herein, the device cache controller tracks the number of dirty pages in the device cache and makes that information available to the ARM firmware dynamically. In some embodiments of the disclosure, the ARM firmware dynamically queries the device cache controller regarding the status of each device cache page. By querying status of the pages in the device cache, the ARM firmware may generate statistics of the number of dirty pages at that time. In yet other embodiments of the disclosure, the ARM firmware maintains a bit map of dirty pages as a result of the page status query process. In yet other embodiments of the disclosure, the device cache controller and/or ARM firmware may make the dirty page number and dirty page bit map available to the host. Host software may read or retrieve number of dirty pages in the device cache and/or dirty page bitmap using various methods like Compressed Sparse Row (CSR), Visual Development Module (VDM), DoE, logs, or telemetry.

According to the subject matter disclosed herein, the ARM firmware checks the dirty data level repeatedly or periodically, such as at 1 millisecond (ms), 100 ms, or 1 sec, etc., time intervals. At one or more time intervals, the ARM firmware may determine whether or not the current dirty page level is above the high threshold. If the current dirty page level is above high threshold, the ARM firmware may issue a dirty data page flush command to the device cache controller. The device cache controller may then flush one or more corresponding dirty data pages to the NAND memory. This action may result in a reduction of the dirty page level in the device cache. The ARM firmware may continue to issue the dirty data page flush commands to the device cache controller until the dirty page level reduces below low threshold. This method may ensure that, at any given time, independent of the host application workload, the amount of dirty data present in the device cache is always below the maximum threshold and may be safely persisted if needed.

It is possible that even with an aggressive dirty data flush approach after the high threshold is crossed, the data flush might fail to reduce the dirty data level in the device cache below the high threshold. This may happen if the host application workload active at that time is very write intensive. If the dirty data page level reaches the maximum threshold, the device cache controller may stop accepting any more host application write operations. This back-pressure or throttling may cap or limit further rises in a dirty data level in the device cache. The maximum threshold may correspond to the hold-up energy available at that time that is needed to safely flush all the dirty data in the device cache, in case of sudden power loss or shutdown events. That is to say, based on the amount of hold up energy available to the device, the device may provide a guarantee of safe persistence of up to the maximum threshold amount of data.

According to the subject matter disclosed herein, the methodology of computation of the maximum threshold, the high threshold, and the low threshold is described. In some embodiments of the disclosure, the maximum threshold, the high threshold and the low thresholds are flushing thresholds that may be set by the memory device. In other embodiments of the disclosure, the maximum flush threshold, the high flush threshold and the low flush threshold may be programmed by the host and/or BMC using various methods like CSR, VDM, DoE, Mailbox, etc.

The maximum (max) threshold shown may change over time for the life cycle of the memory device. This may happen as super-capacitors and other such components used in the energy bank age and deteriorate over time. The high threshold and the low threshold may also change over time for any of various reasons.

The maximum threshold for the dirty data level may be computed based on the hold-up energy available in the memory device, such as the CXL memory device, at any given time. For a given amount of energy, an amount of data that may be safely written to the NAND memory may not be a linear equation. For that reason, the CXL memory device may perform a characterization cycle for itself, wherein the CXL memory device determines an amount of energy needed to flush a given amount of data, and performs this determination for each of a plurality of different amounts of data. These determinations may be stored as a data-to-hold-up energy table that may be pre-programmed into the CXL memory device by a device manufacturer, by a device user, or by another entity. The data-to-hold-up energy table is as follows.

| Data-to-Hold-up Energy Table | |
|---|---|
| Data Amount [GB] | Energy Need [Joules] |
| 1 | 9 |
| 2 | 12 |
| 3 | 14 |
| 4 | |
| 16 | 56 |
| | |
| Capacity of CXL Memory Device | 86 |

The data-to-hold-up energy table above may be constructed for various data size granularities such as 1 megabyte (MB), 100 MB, 1 gigabyte (GB), 10 GB, etc. The unit used above of 1 GB is just an example. In some embodiments of the disclosure, the data-to-hold-up energy table is reported to host and/or BMC. The host and/or BMC may use such information to program the max threshold, the high threshold, the low threshold as well as to make other operation and management decisions.

According to the subject matter disclosed herein, on a periodic or repeated basis, say 1 sec, 5 minutes, 1 day etc., intervals, the ARM firmware determines the health status and the amount of hold-up energy available in the energy bank of the memory device. The ARM firmware may then perform a reverse look-up in the Data-to-Flush Energy Table to obtain a corresponding maximum amount of dirty data that can be flushed using that amount of energy. For example, in the data-to-hold-up energy table above, if the available energy is 14 joules, then the ARM firmware would set the maximum threshold to 3 GB. That is to say, in this example, the memory device may only guarantee safe persistence of up to 3 GB dirty data in the device cache. And the CXL memory device may ensure that it does not have more than 3 GB dirty data in its device cache at any time by performing background flush operations. As the energy status of the energy bank may change over time during the useful life of the CXL memory device, the ARM firmware may appropriately adjust the maximum threshold based on the hold-up energy status.

Periodically, say at 1 sec, 5 minutes, 1 day, etc. intervals, the ARM firmware may check the health status and amount of hold-up energy available in the Energy Bank of the device. The ARM firmware may then perform a reverse look-up in the data-to-hold-up energy table described above to determine the corresponding maximum amount of dirty data that may be persisted using that amount of energy. As the energy status of the energy bank may change over time during the useful life of the CXL memory device, the ARM firmware can appropriately adjust the MAX Flush Threshold based on the hold-up energy status.

Alternatively or additionally, the memory device may maintain a minimum energy threshold as a parameter in any of the operations described above. If the hold-up energy level falls below this threshold, the ARM firmware may send an alert to the host. The device may be replaced to ensure uninterrupted functionality in the system.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable or storage medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

## Claims

1. A persistent memory device, comprising:
a non-volatile storage (345) for storing a data;
a volatile storage (340) as a cache for the data;
a cache controller (360) to manage access to the data in the non-volatile storage (345) and the volatile storage (340); and
a storage (370) for storing a table to associate a first number of dirty pages of the data to copy from the volatile storage (340) to the non-volatile storage (345) with an energy level,
wherein the cache controller is configured to copy a dirty page of the data from the volatile storage (340) to the non-volatile storage (345) based at least in part on a second number of dirty pages of the data in the volatile storage (340) exceeding the first number of dirty pages.

2. The persistent memory device according to claim 1, further comprising an energy bank (325) to provide the energy level.

3. The persistent memory device according to claim 2, wherein:
the persistent memory device further comprises a power interruption detector (320) to switch the persistent memory device to the energy bank (325) based at least in part on a primary power to the persistent memory device being interrupted; and
the cache controller (360) is configured to copy the dirty page of the data from the volatile storage (340) to the non-volatile storage (345) based at least in part on the primary power to the persistent memory device being interrupted.

4. The persistent memory device according to claim 2 or 3, further comprising a monitor circuit (375) to monitor a health of the energy bank (325).

5. The persistent memory device according to claim 4, wherein:
the monitor circuit (375) is configured to determine a second energy level based on the health of the energy bank (325);
the persistent memory device is configured to determine an updated first number of dirty pages based on the second energy level; and
the cache controller (360) is configured to copy the dirty page of the data from the volatile storage (340) to the non-volatile storage (345) based at least in part on a second number of dirty pages of the data in the volatile storage (340) exceeding the updated first number of dirty pages.

6. The persistent memory device according to any one of claims 1 to 5, wherein:
the persistent memory device is based on a low threshold (625), a high threshold (620), and a maximum threshold (615);
the maximum threshold (615) is based at least in part on the table to associate the first number of dirty pages of the data to copy from the volatile storage (340) to the non-volatile storage (345) with the energy level;
the high threshold (620) is based at least in part on a first percentage of the maximum threshold (615); and
the low threshold (620) is based at least in part on a second percentage of the maximum threshold (615).

7. The persistent memory device according to claim 6, wherein the cache controller (360) is configured to refuse a write request from a processor based on the second number of dirty pages exceeding the maximum threshold (615).

8. A method, comprising:
determining (1105) a first number of dirty pages to store in a volatile storage (340) of a persistent memory device, the first number of dirty pages based on an energy level of an energy bank (325);
determining (1110) a second number of dirty pages in the volatile storage (340) of the persistent memory device; and
copying (1115) a dirty page from the volatile storage (340) of the persistent memory device to a non-volatile storage (345) of the persistent memory device based at least in part on the second number of dirty pages exceeding the first number of dirty pages.

9. The method according to claim 8, wherein determining (1105) the first number of dirty pages to store in the volatile storage (340) of the persistent memory device includes looking up the first number of dirty pages in a table based on the energy level of the energy bank (325).

10. The method according to claim 8 or 9, further comprising:
receiving (1405) a write request for the dirty page from a processor, the write request including a user data;
storing (1410) the user data in the volatile storage (340); and
incrementing (1415) the second number of dirty pages.

11. The method according to any one of claims 8 to 10, wherein:
the method further comprises:
determining (1505) that a primary power to the persistent memory device is interrupted; and
switching (1510) the persistent memory device to the energy bank (325) based at least in part on the primary power to the persistent memory device being interrupted; and
copying the dirty page from the volatile storage (340) of the persistent memory device to the non-volatile storage (345) of the persistent memory device based at least in part on the second number of dirty pages exceeding the first number of dirty pages includes copying the dirty page from the volatile storage (340) of the persistent memory device to the non-volatile storage (345) of the persistent memory device based at least in part on the primary power to the persistent memory device being interrupted.

12. The method according to any one of claims 8 to 11, further comprising monitoring a health of the energy bank (325),
wherein monitoring the health of the energy bank (325) includes:
updating the energy level to a second energy level based on the health of the energy bank (325); and
redetermining the first number of dirty pages to store in the volatile storage (340) of the persistent memory device based on the second energy level of the energy bank (325).

13. The method according to any one of claims 8 to 12, wherein copying the dirty page from the volatile storage (340) of the persistent memory device to the non-volatile storage (345) of the persistent memory device based at least in part on the second number of dirty pages exceeding the first number of dirty pages includes decrementing the second number of dirty pages.

14. The method according to any one of claims 8 to 13, further comprising determining a high threshold (620) based at least in part on the first number of dirty pages; and
wherein copying the dirty page from the volatile storage (340) of the persistent memory device to the non-volatile storage (345) of the persistent memory device based at least in part on the second number of dirty pages exceeding the first number of dirty pages includes copying the dirty page from the volatile storage (340) of the persistent memory device to the non-volatile storage (345) of the persistent memory device based at least in part on the second number of dirty pages exceeding the high threshold (620).

15. The method according to claim 14, further comprising:
determining a maximum threshold (615) based at least in part on the second number of dirty pages; and
determining the high threshold based at least in part on the second number of dirty pages includes determining the high threshold as a percentage of the maximum threshold (615).
